# EUROPEAN PATENT APPLICATION

(11) **EP 4 583 440 A2**
(43) Date of publication of application: **09.07.2025**
(21) Application number: 25154076.1
(22) Date of filing: 21.11.2019
(51) Int. Cl.: H04L 1/1829

(54) **DATA TRANSMISSION METHOD, APPARATUS, AND SYSTEM**

(62) Divisional of application: 19953324.1
(71) Applicant: Huawei Technologies Co., Ltd., Shenzhen, Guangdong 518129 (CN)
(72) Inventor: ZHANG, Peng, Shenzhen, 518129 (CN); WANG, Jun, Shenzhen, 518129 (CN); XU, Hua, Shenzhen, 518129 (CN)
(74) Representative: Epping - Hermann - Fischer

(57) **Abstract**

This application provides a data transmission method and an apparatus, and may be applied to the fields of user cooperation, user relay, Internet of vehicles, and the like. The method includes: receiving first data and first identification information of the first data from a first network apparatus, where the first identification information is used to identify the first data; receiving second data and second identification information of the second data from a second terminal apparatus, where the second identification information is used to identify the second data; and determining, based on the first identification information and the second identification information, that the first data and the second data belong to same data.

## Description

### TECHNICAL FIELD

This application relates to the communication field, and in particular, to a data transmission method, an apparatus, and a system.

### BACKGROUND

User equipment cooperation (user equipment cooperation, UE cooperation) is one of features mainly supported in a next-generation communication system. Using UE cooperation can significantly increase a system capacity and network coverage, and reduce load on a base station side. A transport block (transport block, TB) sent by a base station to a terminal device is converted into a data signal through encoding and modulation, and the data signal is sent by the base station to the terminal device. The data signal may also be received by another user equipment, and the data signal that carries the transport block may be forwarded to the terminal device through a sidelink, to improve a data receiving capability of the terminal device and data receiving reliability.

In the current technology, the terminal device can identify whether data signals transmitted a plurality of times only on a Uu interface (Uu interface, Uu) link come from a same transport block, or whether data signals transmitted a plurality of times on a sidelink come from a same transport block. The Uu interface link is a link between the base station and the terminal device. Even if data signals from a plurality of links come from a same transport block, the terminal device cannot combine these data signals. Consequently, data signals of different links cannot be combined, decreasing a success rate of restoring a transport block by the terminal apparatus, and reducing communication reliability.

### SUMMARY

This application provides a data transmission method, an apparatus, and a system, to improve data transmission reliability.

According to a first aspect, a data transmission method is provided. The method may be performed by a first terminal apparatus. The first terminal apparatus may be a module or a chip in the first terminal apparatus, or the first terminal apparatus may be a chip or a system-on-a-chip. The method includes: The first terminal apparatus receives first data and first identification information of the first data from a first network apparatus, where the first identification information is used to identify the first data; the first terminal apparatus receives second data and second identification information of the second data from a second terminal apparatus, where the second identification information is used to identify the second data, and the first identification information and the second identification information are further used to determine whether the first data and the second data belong to same data; and the first terminal apparatus determines, based on the first identification information and the second identification information, that the first data and the second data belong to same data.

According to this embodiment of this application, the first terminal apparatus receives the first data and the first identification information from the first network apparatus and the second data and the second identification information from the second terminal apparatus. The first terminal apparatus determines, based on the first identification information and the second identification information, that the first data and the second data belong to same data. Because the first data and the second data belong to same data, there is a possibility that the two pieces of data may be combined, and data transmission reliability can be improved.

In a possible design, the first identification information includes a first identifier, the first identifier is used to identify the first data, the second identification information includes a second identifier, the second identifier is used to identify the second data, and the second identifier and the first identifier are a same identifier. That the first terminal apparatus determines, based on the first identification information and the second identification information, that the first data and the second data belong to same data includes: The first terminal apparatus determines, based on the first identifier and the second identifier, that the first data and the second data belong to same data.

According to the foregoing method, whether the first data and the second data belong to same data is determined based on an identifier that identifies data. This not only improves data transmission reliability, but also can reduce complexity for the first terminal apparatus to determine whether received data comes from a same data packet or whether received data belongs to same data.

In a possible design, the first identification information includes a first identifier, the first identifier is used to identify the first data, the second identification information includes the second identifier, and the second identifier is used to identify the second data. That the first terminal apparatus determines, based on the first identification information and the second identification information, that the first data and the second data belong to same data includes: The first terminal apparatus determines, based on the first identifier, the second identifier, and a correspondence between the first identifier and the second identifier, that the first data and the second data belong to same data.

According to this embodiment of this application, the first identifier, the second identifier, and the correspondence between the first identifier and the second identifier are jointly used to determine that the first data and the second data belong to same data. A correspondence manner of a numerical relationship between the first identifier and the second identifier is more flexible. The first identifier and the second identifier may be the same, or have different values obtained based on the correspondence.

In a possible design, the first identification information includes a first identifier and a second identifier, the second identification information includes the second identifier, the first identifier is used to identify the first data, the second identifier is used to identify the second data, and the second identifier is further used to determine whether the second data and the first data belong to same data. That the first terminal apparatus determines, based on the first identification information and the second identification information, that the first data and the second data belong to same data includes: The first terminal apparatus determines, based on the second identifier from the first network apparatus and the second identifier from the second terminal apparatus, that the first data and the second data belong to same data. In a possible design, the first terminal apparatus combines the first data and the second data.

According to this embodiment of this application, the first terminal apparatus combines two pieces of data from same source data, a transport block, or original data. Compared with restoring from a single piece of data, a probability of successfully restoring the transport block or the source data from the two pieces of data is higher, so that transmission reliability is improved.

In a possible design, that the first terminal apparatus determines, based on the first identification information and the second identification information, that the first data and the second data belong to same data further includes: The first terminal apparatus determines, based on the first identification information, the second identification information, a first time difference, and a first time threshold, that the first data and the second data belong to same data, where the first time difference includes a time difference between a time point at which the first terminal apparatus receives the first data and a time point at which the first terminal apparatus receives the second data, and the first time difference is less than the first time threshold. The first time threshold is protocol-defined; or the first terminal apparatus receives a higher-layer signaling configuration or a physical layer signaling configuration from the first network apparatus, where the higher-layer signaling configuration or the physical layer signaling configuration is used to indicate the first time threshold.

According to this embodiment of this application, the first terminal apparatus determines, based on the first identification information, the second identification information, the first time difference, and the first time threshold, that the first data and the second data belong to same data. When the first time difference is greater than the first time threshold, regardless of a relationship between the first identification information and the second identification information, the first data and the second data do not belong to same data. A time limitation prevents the first terminal apparatus from combining data that does not belong to same data, so that a probability of a data combination error is reduced.

In a possible design, that the first data and the second data belong to same data includes: The first data and the second data belong to a same data block.

In a possible design, the correspondence between the first identifier and the second identifier is protocol-defined; or the first terminal apparatus receives a higher-layer signaling configuration or a physical layer signaling configuration from the first network apparatus, where the higher-layer signaling configuration or the physical layer signaling configuration is used to indicate the correspondence between the first identifier and the second identifier, and the correspondence is used to indicate that the first data identified by the first identifier and the second data identified by the second identifier belong to same data.

In a possible design, the first terminal apparatus and the second terminal apparatus belong to a same cooperation group, and a quantity of terminal apparatuses in the cooperation group is greater than or equal to 2.

According to this embodiment of this application, in addition to the first terminal apparatus and the second terminal apparatus, the cooperation group may further include a third terminal apparatus or more terminal apparatuses. A plurality of terminal apparatuses cooperate with each other, so that a success rate of restoring data by a terminal apparatus can be effectively improved.

According to a second aspect, a data transmission method is provided. The method may be performed by a first network apparatus. The first network apparatus may be a module or a chip in the first network apparatus, or the first network apparatus may be a chip or a system-on-a-chip. The method includes: The first network apparatus sends first data and first identification information to a first terminal apparatus, where the first identification information is used to identify the first data; and the first network apparatus sends the first data and the first identification information to a second terminal apparatus, where the first identification information is further used to determine second identification information, the second identification information is used to identify second data, the second data is data transmitted between the first terminal apparatus and the second terminal apparatus, and the first identification information and the second identification information are further used to determine whether the first data sent to the first terminal apparatus and the second data belong to same data.

According to this embodiment of this application, the first identification information and the second identification information are further used to determine whether the first data sent to the first terminal apparatus and the second data belong to same data. The first terminal apparatus may determine, based on the first identification information and the second identification information, whether the first data and the second data belong to same data. If the first data and the second data belong to same data, there is a possibility that the two pieces of data may be combined. Therefore, a success rate and reliability of data transmission can be improved.

In a possible design, the first identification information includes a first identifier, and the first identifier is used to identify the first data sent by the first network apparatus to the first terminal apparatus or used to identify the first data sent by the first network apparatus to the second terminal apparatus. The second identification information includes a second identifier, the second identifier is used to identify the second data, and the second identifier and the first identifier are a same identifier. The first identifier used to identify the first data sent by the first network apparatus to the first terminal apparatus and the second identifier are used to determine that the first data sent by the first network apparatus to the first terminal apparatus and the second data belong to same data.

According to this embodiment of this application, that the first identifier and the second identifier are the same may be used to determine that the first data of the first network apparatus and the second data from the second terminal apparatus belong to same data. This not only improves data transmission reliability, but also can reduce complexity for the first terminal apparatus to determine whether received data comes from a same data packet or whether received data belongs to same data.

In a possible design, the first identification information includes a first identifier, and the first identifier is used to identify the first data sent by the first network apparatus to the first terminal apparatus or used to identify the first data sent by the first network apparatus to the second terminal apparatus. The second identification information includes a second identifier, and the second identifier is used to identify the second data. The first identifier used to identify the first data sent by the first network apparatus to the first terminal apparatus, the second identifier, and a correspondence between the first identifier and the second identifier are used to determine that the first data sent by the first network apparatus to the first terminal apparatus and the second data belong to same data.

According to this embodiment of this application, the first identifier, the second identifier, and the correspondence between the first identifier and the second identifier are jointly used to determine that the first data and the second data belong to same data. A correspondence manner of a numerical relationship between the first identifier and the second identifier is more flexible. The first identifier and the second identifier may be the same, or have different values obtained based on the correspondence.

In a possible design, the first identification information includes a first identifier and a second identifier, the second identification information includes the second identifier, the first identifier is used to identify the first data sent by the first network apparatus to the first terminal apparatus or used to identify the first data sent by the first network apparatus to the second terminal apparatus, the second identifier is used to identify the second data, and the second identifier is further used to determine whether the second data and the first data belong to same data. The second identifier sent by the first network apparatus to the first terminal apparatus and the second identifier sent by the second terminal apparatus to the first terminal apparatus are used to determine that the first data sent by the first network apparatus to the first terminal apparatus and the second data belong to same data.

In a possible design, that the first data and the second data belong to same data includes: The first data and the second data belong to a same data block.

In a possible design, the correspondence between the first identifier and the second identifier is protocol-defined; or the first network apparatus sends a higher-layer signaling configuration or a physical layer signaling configuration to the first terminal apparatus, where the higher-layer signaling configuration or the physical layer signaling configuration is used to indicate the correspondence between the first identifier and the second identifier, and the correspondence is used to indicate that the first data identified by the first identifier and the second data identified by the second identifier belong to same data.

In a possible design, the first terminal apparatus and the second terminal apparatus belong to a same cooperation group, and a quantity of terminal apparatuses in the cooperation group is greater than or equal to 2.

According to this embodiment of this application, in addition to the first terminal apparatus and the second terminal apparatus, the cooperation group may further include a third terminal apparatus or more terminal apparatuses. A plurality of terminal apparatuses cooperate with each other, so that a success rate of restoring data by a terminal apparatus can be effectively improved.

According to a third aspect, a data transmission method is provided. The method may be performed by a second terminal apparatus. The second terminal apparatus may be a module or a chip in the second terminal apparatus, or the second terminal apparatus may be a chip or a system-on-a-chip. The method includes: The second terminal apparatus receives first data and first identification information of the first data from a first network apparatus, where the first identification information is used to identify the first data; and the second terminal apparatus sends second data and second identification information of the second data to a first terminal apparatus, where the second identification information is used to identify the second data, the second data is data determined based on the first data, the second identification information is identification information determined based on the first identification information, and the first identification information used to identify the first data sent by the first network apparatus to the first terminal apparatus and the second identification information are further used to determine whether the first data sent by the first network apparatus to the first terminal apparatus and the second data belong to same data.

According to this embodiment of this application, the second terminal apparatus determines the second data based on the first data. The second terminal apparatus determines the second identification information based on the first identification information, and sends the second data and the second identification information to the first terminal apparatus. The second identification information is used by the first terminal apparatus to determine whether the first data and the second data come from same data. If the first data and the second data come from same data, there is a possibility that the two pieces of data may be combined, and data transmission reliability can be improved.

In a possible design, the first identification information includes a first identifier, and the first identifier is used to identify the first data received by the second terminal apparatus from the first network apparatus or used to identify the first data sent by the first network apparatus to the first terminal apparatus. That the second identification information is identification information determined based on the first identification information includes: The second identification information includes a second identifier, the second identifier is used to identify the second data, and the second identifier and the first identifier are a same identifier. The first identifier used to identify the first data sent by the first network apparatus to the first terminal apparatus and the second identifier are used to determine that the first data sent by the first network apparatus to the first terminal apparatus and the second data belong to same data. According to the foregoing method, whether the first data and the second data belong to same data is determined based on an identifier that identifies data. This not only improves data transmission reliability, but also can reduce complexity for the first terminal apparatus to determine whether received data comes from a same data packet or whether received data belongs to same data.

In a possible design, the first identification information includes a first identifier, and the first identifier is used to identify the first data received by the second terminal apparatus from the first network apparatus or used to identify the first data sent by the first network apparatus to the first terminal apparatus. The second identification information includes a second identifier, and the second identifier is used to identify the second data. That the second identification information is identification information determined based on the first identification information includes: The second identifier is identification information determined based on the first identifier and a correspondence between the first identifier and the second identifier. The first identifier used to identify the first data sent by the first network apparatus to the first terminal apparatus, the second identifier, and the correspondence between the first identifier and the second identifier are used to determine that the first data sent by the first network apparatus to the first terminal apparatus and the second data belong to same data.

According to this embodiment of this application, the first identifier, the second identifier, and the correspondence between the first identifier and the second identifier are jointly used to determine that the first data and the second data belong to same data. A correspondence manner of a numerical relationship between the first identifier and the second identifier is more flexible. The first identifier and the second identifier may be the same, or have different values obtained based on the correspondence. In a possible design, the first identification information includes a first identifier and a second identifier, and the first identifier is used to identify the first data received by the second terminal apparatus from the first network apparatus or used to identify the first data sent by the first network apparatus to the first terminal apparatus. That the second identification information is identification information determined based on the first identification information includes: The second identification information includes the second identifier, the second identifier is used to identify the second data, and the second identifier is further used to determine whether the first data sent by the first network apparatus to the first terminal apparatus and the second data belong to same data. The second identifier sent by the first network apparatus to the first terminal apparatus and the second identifier sent by the second terminal apparatus to the first terminal apparatus are used to determine that the first data and the second data belong to same data.

In a possible design, that the first data and the second data belong to same data includes: The first data and the second data belong to a same data block.

In a possible design, the correspondence between the first identifier and the second identifier is protocol-defined; or the first terminal apparatus receives a higher-layer signaling configuration or a physical layer signaling configuration from the first network apparatus, where the higher-layer signaling configuration or the physical layer signaling configuration is used to indicate the correspondence between the first identifier and the second identifier, and the correspondence is used to indicate that the first data identified by the first identifier and the second data identified by the second identifier belong to same data.

In a possible design, the first terminal apparatus and the second terminal apparatus belong to a same cooperation group, and a quantity of terminal apparatuses in the cooperation group is greater than or equal to 2.

According to this embodiment of this application, in addition to the first terminal apparatus and the second terminal apparatus, the cooperation group may further include a third terminal apparatus or more terminal apparatuses. A plurality of terminal apparatuses cooperate with each other, so that a success rate of restoring data by a terminal apparatus can be effectively improved.

According to a fourth aspect, a first terminal apparatus is provided. For beneficial effects, refer to the descriptions of the first aspect. Details are not described herein again. The apparatus may be the first terminal apparatus, a chip or a module in the first terminal apparatus, or a chip or a system-on-a-chip. The apparatus includes: a receiving unit, configured to receive first data and first identification information of the first data from a first network apparatus, where the first identification information is used to identify the first data, where the receiving unit is further configured to receive second data and second identification information of the second data from a second terminal apparatus, where the second identification information is used to identify the second data, and the first identification information and the second identification information are further used to determine whether the first data and the second data belong to same data; and a determining unit, configured to determine, based on the first identification information and the second identification information, that the first data and the second data belong to same data.

According to this embodiment of this application, the first terminal apparatus receives the first data and the first identification information from the first network apparatus and the second data and the second identification information from the second terminal apparatus. The first terminal apparatus determines, based on the first identification information and the second identification information, that the first data and the second data belong to same data. Because the first data and the second data belong to same data, there is a possibility that the two pieces of data may be combined, and data transmission reliability can be improved.

In a possible design, the first identification information includes a first identifier, the first identifier is used to identify the first data, the second identification information includes a second identifier, the second identifier is used to identify the second data, and the second identifier and the first identifier are a same identifier. That the determining unit determines, based on the first identification information and the second identification information, that the first data and the second data belong to same data includes: The determining unit determines, based on the first identifier and the second identifier, that the first data and the second data belong to same data.

According to the foregoing method, whether the first data and the second data belong to same data is determined based on an identifier that identifies data. This not only improves data transmission reliability, but also can reduce complexity for the first terminal apparatus to determine whether received data comes from a same data packet or whether received data belongs to same data.

In a possible design, the first identification information includes the first identifier, the first identifier is used to identify the first data, the second identification information includes the second identifier, and the second identifier is used to identify the second data. That the determining unit determines, based on the first identification information and the second identification information, that the first data and the second data belong to same data includes: The determining unit determines, based on the first identifier, the second identifier, and a correspondence between the first identifier and the second identifier, that the first data and the second data belong to same data.

According to this embodiment of this application, the first identifier, the second identifier, and the correspondence between the first identifier and the second identifier are jointly used to determine that the first data and the second data belong to same data. A correspondence manner of a numerical relationship between the first identifier and the second identifier is more flexible. The first identifier and the second identifier may be the same, or have different values obtained based on the correspondence.

In a possible design, the first identification information includes the first identifier and the second identifier, the second identification information includes the second identifier, the first identifier is used to identify the first data, the second identifier is used to identify the second data, and the second identifier is further used to determine whether the second data and the first data belong to same data. That the determining unit determines, based on the first identification information and the second identification information, that the first data and the second data belong to same data includes: The determining unit determines, based on the second identifier from the first network apparatus and the second identifier from the second terminal apparatus, that the first data and the second data belong to same data.

In a possible design, the first terminal apparatus combines the first data and the second data. In a possible design, that the determining unit determines, based on the first identification information and the second identification information, that the first data and the second data belong to same data further includes: The determining unit determines, based on the first identification information, the second identification information, a first time difference, and a first time threshold, that the first data and the second data belong to same data, where the first time difference includes a time difference between a time point at which the receiving unit receives the first data and a time point at which the receiving unit receives the second data, and the first time difference is less than the first time threshold. The first time threshold is protocol-defined; or the receiving unit receives a higher-layer signaling configuration or a physical layer signaling configuration from the first network apparatus, where the higher-layer signaling configuration or the physical layer signaling configuration is used to indicate the first time threshold.

According to this embodiment of this application, the first terminal apparatus determines, based on the first identification information, the second identification information, the first time difference, and the first time threshold, that the first data and the second data belong to same data. When the first time difference is greater than the first time threshold, regardless of a relationship between the first identification information and the second identification information, the first data and the second data do not belong to same data. A time limitation prevents the first terminal apparatus from combining data that does not belong to same data, so that a probability of a data combination error is reduced.

In a possible design, that the first data and the second data belong to same data includes: The first data and the second data belong to a same data block.

In a possible design, the correspondence between the first identifier and the second identifier is protocol-defined; or the receiving unit receives a higher-layer signaling configuration or a physical layer signaling configuration from the first network apparatus, where the higher-layer signaling configuration or the physical layer signaling configuration is used to indicate the correspondence between the first identifier and the second identifier, and the correspondence is used to indicate that the first data identified by the first identifier and the second data identified by the second identifier belong to same data.

According to a fifth aspect, a first network apparatus is provided. For beneficial effects, refer to the descriptions of the second aspect. Details are not described herein again. The apparatus may be the first network apparatus, a chip or a module in the first network apparatus, or a chip or a system-on-a-chip. The apparatus includes a sending unit, configured to send first data and first identification information to a first terminal apparatus, where the first identification information is used to identify the first data. The sending unit is further configured to send the first data and the first identification information to a second terminal apparatus, where the first identification information is further used to determine second identification information, the second identification information is used to identify second data, the second data is data transmitted between the first terminal apparatus and the second terminal apparatus, and the first identification information and the second identification information are further used to determine whether the first data sent to the first terminal apparatus and the second data belong to same data.

According to this embodiment of this application, the first identification information and the second identification information are further used to determine whether the first data sent to the first terminal apparatus and the second data belong to same data. The first terminal apparatus may determine, based on the first identification information and the second identification information, whether the first data and the second data belong to same data. If the first data and the second data belong to same data, there is a possibility that the two pieces of data may be combined. Therefore, a success rate and reliability of data transmission can be improved.

In a possible design, the first identification information includes a first identifier, and the first identifier is used to identify the first data sent by the sending unit to the first terminal apparatus or used to identify the first data sent by the first network apparatus to the second terminal apparatus. The second identification information includes a second identifier, the second identifier is used to identify the second data, and the second identifier and the first identifier are a same identifier. The first identifier used to identify the first data sent by the sending unit to the first terminal apparatus and the second identifier are used to determine that the first data sent by the sending unit to the first terminal apparatus and the second data belong to same data.

According to this embodiment of this application, that the first identifier and the second identifier are the same may be used to determine that the first data of the first network apparatus and the second data from the second terminal apparatus belong to same data. This not only improves data transmission reliability, but also can reduce complexity for the first terminal apparatus to determine whether received data comes from a same data packet or whether received data belongs to same data.

In a possible design, the first identification information includes a first identifier, and the first identifier is used to identify the first data sent by the first network apparatus to the first terminal apparatus or used to identify the first data sent by the sending unit to the second terminal apparatus. The second identification information includes a second identifier, and the second identifier is used to identify the second data. The first identifier used to identify the first data sent by the sending unit to the first terminal apparatus, the second identifier, and a correspondence between the first identifier and the second identifier are used to determine that the first data sent by the sending unit to the first terminal apparatus and the second data belong to same data.

According to this embodiment of this application, the first identifier, the second identifier, and the correspondence between the first identifier and the second identifier are jointly used to determine that the first data and the second data belong to same data. A correspondence manner of a numerical relationship between the first identifier and the second identifier is more flexible. The first identifier and the second identifier may be the same, or have different values obtained based on the correspondence.

In a possible design, the first identification information includes a first identifier and a second identifier, the second identification information includes the second identifier, the first identifier is used to identify the first data sent by the sending unit to the first terminal apparatus or used to identify the first data sent by the first network apparatus to the second terminal apparatus, the second identifier is used to identify the second data, and the second identifier is further used to determine whether the second data and the first data belong to same data. The second identifier sent by the sending unit to the first terminal apparatus and the second identifier sent by the second terminal apparatus to the first terminal apparatus are used to determine that the first data sent by the sending unit to the first terminal apparatus and the second data belong to same data.

In a possible design, that the first data and the second data belong to same data includes: The first data and the second data belong to a same data block.

In a possible design, the correspondence between the first identifier and the second identifier is protocol-defined; or the sending unit sends a higher-layer signaling configuration or a physical layer signaling configuration to the first terminal apparatus, where the higher-layer signaling configuration or the physical layer signaling configuration is used to indicate the correspondence between the first identifier and the second identifier, and the correspondence is used to indicate that the first data identified by the first identifier and the second data identified by the second identifier belong to same data.

According to a sixth aspect, a second terminal apparatus is provided. For beneficial effects, refer to the descriptions of the third aspect. Details are not described herein again. The apparatus may be the second terminal apparatus, a chip or a module in the second terminal apparatus, or a chip or a system-on-a-chip. The apparatus includes: a receiving unit, configured to receive first data and first identification information of the first data from a first network apparatus, where the first identification information is used to identify the first data; and a sending unit, configured to send second data and second identification information of the second data to a first terminal apparatus, where the second identification information is used to identify the second data, the second data is data determined based on the first data, the second identification information is identification information determined based on the first identification information, and the first identification information used to identify the first data sent by the first network apparatus to the first terminal apparatus and the second identification information are further used to determine whether the first data sent by the first network apparatus to the first terminal apparatus and the second data belong to same data. According to this embodiment of this application, the second terminal apparatus determines the second data based on the first data. The second terminal apparatus determines the second identification information based on the first identification information, and sends the second data and the second identification information to the first terminal apparatus. The second identification information is used by the first terminal apparatus to determine whether the first data and the second data come from same data. If the first data and the second data come from same data, there is a possibility that the two pieces of data may be combined, and data transmission reliability can be improved.

In a possible design, the first identification information includes a first identifier, and the first identifier is used to identify the first data received by the receiving unit from the first network apparatus or used to identify the first data sent by the first network apparatus to the first terminal apparatus. That the second identification information is identification information determined based on the first identification information includes: The second identification information includes a second identifier, the second identifier is used to identify the second data, and the second identifier and the first identifier are a same identifier. The first identifier used to identify the first data sent by the first network apparatus to the first terminal apparatus and the second identifier are used to determine that the first data sent by the first network apparatus to the first terminal apparatus and the second data belong to same data.

According to the foregoing method, whether the first data and the second data belong to same data is determined based on an identifier that identifies data. This not only improves data transmission reliability, but also can reduce complexity for the first terminal apparatus to determine whether received data comes from a same data packet or whether received data belongs to same data.

In a possible design, the first identification information includes a first identifier, and the first identifier is used to identify the first data received by the receiving unit from the first network apparatus or used to identify the first data sent by the first network apparatus to the first terminal apparatus. The second identification information includes a second identifier, and the second identifier is used to identify the second data. That the second identification information is identification information determined based on the first identification information includes: The second identifier is identification information determined based on the first identifier and a correspondence between the first identifier and the second identifier. The first identifier used to identify the first data sent by the first network apparatus to the first terminal apparatus, the second identifier, and the correspondence between the first identifier and the second identifier are used to determine that the first data sent by the first network apparatus to the first terminal apparatus and the second data belong to same data.

According to this embodiment of this application, the first identifier, the second identifier, and the correspondence between the first identifier and the second identifier are jointly used to determine that the first data and the second data belong to same data. A correspondence manner of a numerical relationship between the first identifier and the second identifier is more flexible.

In a possible design, the first identification information includes a first identifier and a second identifier, and the first identifier is used to identify the first data received by the receiving unit from the first network apparatus or used to identify the first data sent by the first network apparatus to the first terminal apparatus. That the second identification information is identification information determined based on the first identification information includes: The second identification information includes the second identifier, the second identifier is used to identify the second data, and the second identifier is further used to determine whether the first data sent by the first network apparatus to the first terminal apparatus and the second data belong to same data. The second identifier sent by the first network apparatus to the first terminal apparatus and the second identifier sent by the second terminal apparatus to the first terminal apparatus are used to determine that the first data and the second data belong to same data.

In a possible design, that the first data and the second data belong to same data includes: The first data and the second data belong to a same data block.

In a possible design, the correspondence between the first identifier and the second identifier is protocol-defined; or the first terminal apparatus receives a higher-layer signaling configuration or a physical layer signaling configuration from the first network apparatus, where the higher-layer signaling configuration or the physical layer signaling configuration is used to indicate the correspondence between the first identifier and the second identifier, and the correspondence is used to indicate that the first data identified by the first identifier and the second data identified by the second identifier belong to same data.

According to a seventh aspect, an embodiment of this application provides a computer-readable storage medium or a non-volatile storage medium. The computer-readable storage medium or the non-volatile storage medium stores instructions or a program. When the instructions or the program is run on a computer, the computer is enabled to perform the methods in the foregoing aspects, or when the instructions or the program is run on one or more processors, a communication apparatus including the one or more processors is enabled to perform the methods in the foregoing aspects.

According to an eighth aspect, an embodiment of this application provides a computer program product. The computer program product is configured to store a computer program, and when the computer program is run on a computer, the computer is enabled to perform the method according to any one of the foregoing aspects.

According to a ninth aspect, an embodiment of this application provides a chip or an indication information transmission apparatus, including at least one processor. The at least one processor is coupled to a memory, and the memory includes instructions. The at least one processor runs the instructions, so that an apparatus for transmitting a common signal performs the method according to the first aspect or the second aspect.

According to a tenth aspect, a communication apparatus is provided. The communication apparatus includes one or more processors, and one or more memories or non-volatile storage media. The one or more memories or non-volatile storage media store instructions or a program. When the one or more processors execute the instructions or the program, the communication apparatus or the one or more processors perform the methods in the foregoing aspects and embodiments of this application.

According to an eleventh aspect, a terminal apparatus or a communication apparatus is provided, configured to perform the method according to the first aspect or the third aspect.

According to a twelfth aspect, a network apparatus or a communication apparatus is provided, configured to perform the method according to the second aspect.

According to a thirteenth aspect, an embodiment of this application provides a system. The system includes the first terminal apparatus, the second terminal apparatus, and the first network apparatus in the foregoing aspects.

### BRIEF DESCRIPTION OF DRAWINGS

FIG. 1 is a schematic diagram of an architecture of a system according to an embodiment of this application;
FIG. 2 shows a data transmission method performed by a first terminal apparatus, a second terminal apparatus, a first network apparatus in a system according to an embodiment of this application;
FIG. 3 is a schematic diagram of information indication according to an embodiment of this application;
FIG. 4 is a schematic diagram of information indication according to an embodiment of this application;
FIG. 5 is a schematic diagram of information indication according to an embodiment of this application;
FIG. 6 is a schematic diagram of information indication according to an embodiment of this application;
FIG. 7 shows a first terminal apparatus according to an embodiment of this application;
FIG. 8 shows a first network apparatus according to an embodiment of this application;
FIG. 9 shows a second terminal apparatus according to an embodiment of this application;
FIG. 10 shows a communication apparatus according to an embodiment of this application;
FIG. 11 shows a network apparatus according to an embodiment of this application; and

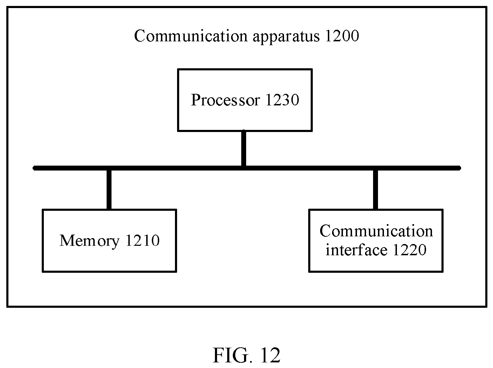

FIG. 12 shows a communication apparatus according to an embodiment of this application.

### DESCRIPTION OF EMBODIMENTS

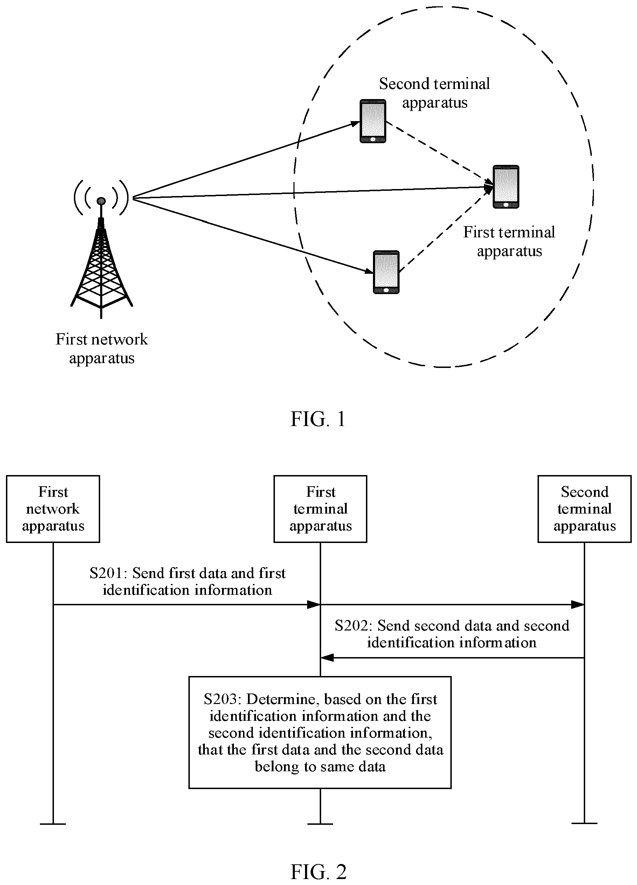

FIG. 1 is a schematic diagram of a possible application scenario according to an embodiment of this application. As shown in FIG. 1, the application scenario may include a plurality of terminal apparatuses and a network apparatus. In an example, the terminal device may be a mobile terminal, and the network device may be an access network device. As shown in FIG. 1, the network apparatus communicates with the plurality of terminal apparatuses through uplinks and downlinks. The plurality of terminal apparatuses may form a user cooperation group, and terminal apparatuses in the cooperation group may also communicate with each other. The network apparatus sends information to the user cooperation group. Both a first terminal apparatus and a second terminal apparatus may receive the information through Uu links, and the second terminal apparatus may further forward the received information to the first terminal apparatus through a sidelink. In this case, the first terminal apparatus receives two pieces of same data through the Uu link and the sidelink. The first terminal apparatus may alternatively send an information request to the second terminal apparatus in a case in which receiving fails or a communication link cannot be established with the network apparatus, and receives information relayed from the second terminal apparatus, to complete cooperation between terminal apparatuses in the cooperation group. Embodiments of this application are applicable to UE cooperation and user equipment relay (UE relay).

In the following descriptions, some terms in embodiments of this application are described, to help a person skilled in the art have a better understanding.
(1) Terminal apparatus: The first terminal apparatus or the second terminal apparatus in this application may include various devices having a wireless communication function, or units, components, modules, apparatuses, chips, or SoCs in the devices. The device having the wireless communication function may be, for example, a vehicle-mounted device, a wearable device, a computing device or another device connected to a wireless modem, a mobile station (mobile station, MS), a terminal (terminal), or user equipment (user equipment, UE). When the first terminal apparatus and the second terminal apparatus are vehicle-mounted devices, the first terminal apparatus and the second terminal apparatus may be placed or installed in a vehicle. The vehicle-mounted device may be considered as a part of the vehicle, or may be considered as a module or module disposed in the vehicle. A vehicle-mounted terminal apparatus may also be referred to as an on board unit (on board unit, OBU).

The first terminal apparatus or the second terminal apparatus in embodiments of this application may alternatively include a device that provides voice and/or data connectivity for a user. Specifically, the first terminal apparatus or the second terminal apparatus includes a device that provides voice for a user, includes a device that provides data connectivity for a user, or includes a device that provides voice and data connectivity to a user. For example, the first terminal apparatus or the second terminal apparatus may include a handheld device having a wireless connection function or a processing device connected to a wireless modem. The terminal device may communicate with a core network through a radio access network (radio access network, RAN), and exchange voice or data with the RAN, or exchange voice and data with the RAN. The terminal apparatus may include user equipment (user equipment, UE), a wireless terminal device, a mobile terminal device, a device-to-device communication (device-to-device, D2D) terminal device, a vehicle-to-everything (vehicle-to-everything, V2X) terminal device, a machine-to-machine/machine-type communication (machine-to-machine/machine-type communication, M2M/MTC) terminal device, an Internet of Things (Internet of Things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal apparatus may include a mobile phone (or referred to as a "cellular" phone), a computer with a mobile terminal device, or a portable, pocket-sized, handheld, or computer built-in mobile apparatus. For example, the terminal apparatus may include a device such as a personal communications service (personal communications service, PCS) phone, a cordless telephone set, a session initiation protocol (session initiation protocol, SIP) phone, a wireless local loop (wireless local loop, WLL) station, or a personal digital assistant (personal digital assistant, PDA). The terminal apparatus may alternatively include a limited device, for example, a device with low power consumption, a device with a limited storage capacity, or a device with a limited computing capability. For example, the terminal apparatus includes an information sensing device such as a bar code, a radio frequency identification (radio frequency identification, RFID), a sensor, a global positioning system (global positioning system, GPS), or a laser scanner.

As an example instead of a limitation, the first terminal apparatus or the second terminal apparatus in embodiments of this application may alternatively be a wearable device. The wearable device may also be referred to as a wearable intelligent device, an intelligent wearable device, or the like, and is an umbrella term for wearable devices that are developed by applying wearable technologies to intelligent designs of daily wear, such as glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, smart helmets, or smart jewelry for monitoring physical signs.

The terminal apparatus may be a terminal device, or may be a module configured to implement functions of the terminal device. The module may be deployed in the terminal device, or may be deployed independently of the terminal device. The module is, for example, a chip, a chip system, or a system-on-a-chip.

(2) Network apparatus: The network apparatus is, for example, an access network (access network, AN) device such as a base station (for example, an access point), or may be a device that communicates with a wireless terminal device over an air interface through one or more cells in an access network. Alternatively, for example, a network device in a vehicle-to-everything (vehicle-to-everything, V2X) technology is a road side unit (road side unit, RSU). The base station may be configured to mutually convert a received over-the-air frame and an IP packet, and serve as a router between a terminal device and a remaining part of the access network, where the remaining part of the access network may include an IP network. The RSU may be a fixed infrastructure entity supporting a V2X application, and may exchange a message with another entity supporting a V2X application. The network device may further coordinate attribute management of the air interface. For example, the network device may include an evolved base station (NodeB, eNB, or e-NodeB, evolved NodeB) in a long term evolution (long term evolution, LTE) system or a long term evolution-advanced (long term evolution-advanced, LTE-A) system, may include a next generation NodeB (next generation NodeB, gNB) in a 5th generation (5^{th} generation, 5G) mobile communication technology new radio (new radio, NR) system (also briefly referred to as an NR system), or may include a centralized unit (centralized unit, CU) and a distributed unit (distributed unit, DU) in a cloud radio access network (cloud radio access network, Cloud RAN) system. This is not limited in embodiments of this application.

(4) Sidelink: A sidelink (sidelink) is a link between terminal apparatuses. An uplink is a link for a terminal apparatus to send information to a network apparatus, and a downlink is a link for the terminal apparatus to receive information from the network apparatus.

(5) Terms "system" and "network" may be used interchangeably in embodiments of this application. "At least one" means one or more, and "a plurality of" means two or more. "And/or" describes an association relationship between associated objects, and indicates that three relationships may exist. For example, A and/or B may indicate the following three cases: A exists alone, both A and B exist, and B exists alone, where A and B may be singular or plural. The character "/" generally represents an "or" relationship between the associated objects. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, a first power control factor and a second power control factor are merely used to distinguish between different power control factors, but do not necessarily indicate that the two types of power control factors are different in content, priorities, importance, or the like.

With reference to specific examples, the following describes embodiments of this application in more detail by using the first terminal apparatus, the second terminal apparatus, and the first network apparatus as examples.

FIG. 2 shows a data transmission method, a first terminal apparatus, a second terminal apparatus, and a first network apparatus that perform the data transmission method, and a system including the first terminal apparatus, the second terminal apparatus, and the first network apparatus according to an embodiment of this application.

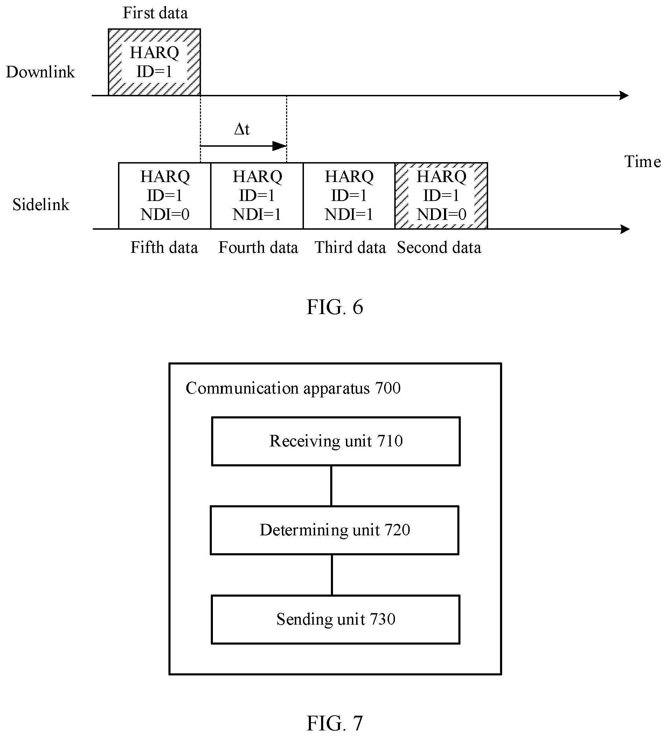

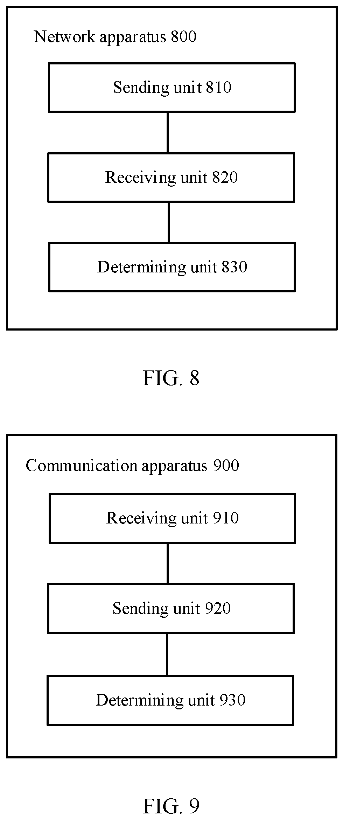

As shown in FIG. 7, the first terminal apparatus includes a receiving unit 710 and a determining unit 720, and may further include a sending unit 730. As shown in FIG. 8, the first network apparatus includes a sending unit 810, and may further include a receiving unit 820 and a determining unit 830. As shown in FIG. 9, the second terminal apparatus includes a receiving unit 910 and a sending unit 920, and may further include a determining unit 930.

When the first terminal apparatus or the second terminal apparatus is a terminal device or user equipment, and the network apparatus is a base station, the receiving unit 710 and the sending unit 730, the receiving unit 910 and the sending unit 920, and the sending unit 810 and the receiving unit 820 may be replaced by transceiver units. The sending unit 730, the sending unit 810, and the sending unit 920 may be transmitters. The receiving unit 710, the receiving unit 820, and the receiving unit 910 may be receivers. The transceiver unit may be a transceiver. The transceiver, the transmitter, or the receiver may be a radio frequency circuit. When the first terminal apparatus or the second terminal apparatus includes a storage unit, the storage unit is configured to store computer instructions. A processor is communicatively connected to a memory. The processor executes the computer instructions stored in the memory, so that the first terminal apparatus, the second terminal apparatus, and the first network apparatus perform the method in the embodiment of FIG. 2. The processor may be a general-purpose central processing unit (CPU), a microprocessor, or an application-specific integrated circuit (application-specific integrated circuit, ASIC).

When the first terminal apparatus, the second terminal apparatus, or the first network device is a chip, the receiving unit 710, the sending unit 730, the receiving unit 910, the sending unit 920, the sending unit 810, or the receiving unit 820 may be an output interface, a pin, a circuit, or the like. The processing unit may execute computer-executable instructions stored in the storage unit, so that a chip in the first terminal apparatus, the second terminal apparatus, or the first network apparatus performs the method in FIG. 2. Optionally, the storage unit is a storage unit in the chip, for example, a register or a buffer, or the storage unit may be a storage unit in the terminal but outside the chip, for example, a read-only memory (read-only memory, ROM), another type of static storage device capable of storing static information and instructions, or a random access memory (random access memory, RAM).

Specific steps of the data transmission method in the embodiment in FIG. 2 are as follows.

Step S201: The sending unit 810 of the first network apparatus sends first data and first identification information to the first terminal apparatus and the second terminal apparatus. The receiving unit 710 of the first terminal apparatus and the receiving unit 910 of the second terminal apparatus receive the first data and the first identification information from the first network apparatus. The first identification information is used to identify the first data, and the first identification information is further used to determine second identification information. The second identification information is used to identify second data. The second data is data transmitted between the first terminal apparatus and the second terminal apparatus. The first identification information and the second identification information are further used to determine whether the first data sent to the first terminal apparatus and the second data belong to same data. That the first data and the second data belong to same data is that the first data and the second data come from a same transport block TB, same source data, or same original data.

Optionally, the first identification information and the second identification information may include hybrid automatic repeat request (hybrid automatic repeat request, HARQ) process numbers, and may further include one or more of a new data indicator (new data indicator, NDI), a subcarrier number CARRIER ID, and a cell number CELL ID. The first identification information and the second identification information may further include other indication information.

The first network apparatus sends the first data and the first identification information to the first terminal apparatus and the second terminal apparatus through a downlink. Optionally, the first data is carried on a physical downlink shared channel (physical downlink shared channel, PDSCH) for sending. The first identification information is carried on a physical downlink control channel (physical downlink control channel, PDCCH) for sending. Alternatively, the first identification information and the first data may be both carried on a physical downlink shared channel or a physical downlink control channel for sending.

The first identification information includes a first identifier. The first identifier may be a hybrid automatic repeat request process number, or the first identifier may be one of a new data indicator, a subcarrier number, a cell number, or the like. For example, the first identification information includes both the hybrid automatic repeat request process number and the new data indicator. When the hybrid automatic repeat request process number of the first identification information and a hybrid automatic repeat request process number of the second identification information are the same or correspond to each other based on a predefined correspondence, and a new data indicator NDI of the second identification information indicates that the second data is new data, the first terminal apparatus may determine that the first data and the second data belong to same data. That the first data and the second data belong to same data is that the first data and the second data come from a same transport block TB, same source data, or same original data.

Therefore, the two pieces of data may be further combined, to improve a restoring success rate of the data block, the source data, or the original data. Data combination may include soft combination, selective combination, or the like. Step S202: The sending unit 920 of the second terminal apparatus sends the second data and the second identification information of the second data to the first terminal apparatus. The receiving unit 710 of the first terminal apparatus receives the second data and the second identification information of the second data from the second terminal apparatus. The second identification information is used to identify the second data. The second data is data determined based on the first data, and the second identification information is identification information determined based on the first identification information. The first identification information used to identify the first data sent by the first network apparatus to the first terminal apparatus and the second identification information are further used to determine whether the first data sent by the first network apparatus to the first terminal apparatus and the second data belong to same data. That the first data and the second data belong to same data is that the first data and the second data come from a same transport block TB, same source data, or same original data. Optionally, the first terminal apparatus may further determine, based on protocol-defined content, or higher-layer signaling, or physical layer signaling configured in a network, whether the first data and the second data belong to same data. That the first data and the second data belong to same data is that the first data and the second data come from a same transport block TB, same source data, or same original data.

Optionally, the sending unit 920 of the second terminal apparatus sends the second data and the second identification information to the first terminal apparatus through a sidelink. The second data is carried on a physical sidelink shared channel (physical sidelink shared channel, PSSCH), and the second indication information is carried on a sidelink physical control channel (physical sidelink control channel, PSCCH). Alternatively, the second data and the second identification information may be both carried on a sidelink physical shared channel or a sidelink physical control channel.

The second data may be new data obtained by decoding and encoding the received first data by the second terminal apparatus. Therefore, the second data and the first data belong to same data. That the first data and the second data belong to same data is that the first data and the second data come from a same transport block TB, same source data, or same original data. Co-decoding the second data and the first data has a higher decoding success rate than decoding only the first data.

Step S203: The determining unit 720 of the first terminal apparatus determines, based on the first identification information and the second identification information, that the first data and the second data belong to same data. After step S203, according to this embodiment of this application, the determining unit 720 of the first terminal apparatus may further combine the first data and the second data. The combination may be performed by combining a part of the two pieces of data or combining the two pieces of data. For example, the first terminal apparatus performs joint processing on the first data and the second data. A signal-to-interference-plus-noise ratio of combined data obtained through the joint processing is higher than that of a single data signal, and a success rate of restoring a transport block from the combined data signal greatly increases. Optionally, if the combination fails, a plurality of receiving and combining processes may further be performed. Optionally, the first terminal apparatus may alternatively combine a plurality of data signals that come from the first network apparatus and that belong to same data. That the first data and the second data belong to same data is that the first data and the second data come from a same transport block TB, same source data, or same original data. Optionally, the first terminal apparatus may alternatively combine a plurality of data signals from a same transport block TB, same source data, or same original data from the second terminal apparatus.

Optionally, the data combined and processed by the first terminal apparatus is not limited to data that separately comes from a network apparatus and a terminal apparatus. The first terminal apparatus may alternatively combine a plurality of signals from same data from a base station, combine a plurality of signals from same data from the second terminal apparatus, or combine a plurality of signals from same data from different terminal apparatuses such as the second terminal apparatus and a third terminal apparatus, to obtain beneficial effects. Herein, "from same data" means that data comes from a same transport block TB, same source data, or same original data.

The determining unit 720 of the first terminal apparatus determines, based on the first identification information and the second identification information, that the first data and the second data belong to same data in various manners. Manner A: The first identification information includes the first identifier, and the first identifier is used to identify the first data. The second identification information includes a second identifier, and the second identifier is used to identify the second data. The second identifier and the first identifier are a same identifier. In this case, the first terminal apparatus determines, based on the first identifier and the second identifier, that the first data and the second data belong to same data. That the first data and the second data belong to same data is that the first data and the second data come from a same transport block TB, same source data, or same original data. Optionally, the second identifier may be different from the first identifier, and the second identifier may be an identifier that is different from the first identifier and that is determined by the second terminal apparatus based on the first identifier. Optionally, the second data includes the first identifier, the second identifier is additional indication information on a sidelink. The second identifier further implies that the second data carries a forwarded transport block instead of a non-forwarded transport block, that is, the first identifier in the first identification information is used to identify the first data.

The first identifier in the second identification information is used to identify the second data. For example, the first identifier in the second identification information is HARQ IDss=5. The HARQ IDss is unrelated to a second identifier

HARQ IDs in the second identification information, and the HARQ IDss is also unrelated to a second identifier HARQ IDu in the first identification information. The HARQ IDss is determined not depending on any identifier in the first identification information or the second identification information. Therefore, the first identifier in the second identification information is not used to determine whether the second data corresponds to the first data. The second identifier in the second identification information is determined based on the first identifier in the first identification information. The second identifier in the second identification information is used to identify first data specifically corresponding to the second data, that is, specific first data that comes from a same transport block (transport block, TB), same source data, or same original data.

For example, data received by the first terminal apparatus on a downlink is data A. A hybrid automatic repeat request process number of the data A is HARQ IDu=1, where the HARQ IDu represents a HARQ ID corresponding to downlink data. The first terminal apparatus separately receives data B, data C, and data D on a sidelink. A Uu link corresponding to the data B associates with HARQ IDs=1, a Uu link corresponding to the data C associates with HARQ IDs=2, and a Uu link corresponding to the data D associates with HARQ IDs=1, where the HARQ IDs represents a HARQ ID corresponding to sidelink data. The first terminal apparatus determines, based on the HARQ IDs, that the data B, the data D, and the data A come from a same transport block TB, same source data, or same original data. The data A, the data B, and the data D are essentially formed from a same transport block TB, same source data, or same original data using one or more coding schemes. For example, 100-bit source data is encoded using a coding scheme 1, a coding scheme 2, and a coding scheme 3 to respectively obtain the data A, the data B, and the data D. The data A, the data B, and the data D all come from the same 100-bit source data, and the three pieces of data may be combined, so that a data restoring rate is increased due to combination.

**Table 1 Examples of data received on a sidelink and corresponding identifiers**

| Data | Identifier |
|---|---|
| Data B | HARQ IDs=1 |
| Data C | HARQ IDs=2 |
| Data D | HARQ IDs=1 |

Manner B: The first identification information includes the first identifier, and the first identifier is used to identify the first data. The second identification information includes the second identifier, and the second identifier is used to identify the second data. The second identifier is further used to identify a correspondence between the first data and the second data. In this case, the first terminal apparatus determines, based on the first identifier, the second identifier, and the correspondence between the first identifier and the second identifier, that the first data and the second data belong to same data. That the first data and the second data belong to same data is that the first data and the second data come from a same transport block TB, same source data, or same original data. For example, data received by the first terminal apparatus on a downlink is data A. A hybrid automatic repeat request process number of the data A is HARQ IDu=2, where the HARQ IDu represents a HARQ ID corresponding to downlink data. The first terminal apparatus separately receives data B, data C, and data D on a sidelink. A Uu link corresponding to the data B associates with HARQ IDs=1, a Uu link corresponding to the data C associates with HARQ IDs=2, and a Uu link corresponding to the data D associates with HARQ IDs=3, where the HARQ IDs represents a HARQ ID corresponding to sidelink data. HARQ IDs=2 of the data C is the same as the HARQ ID of the data A. However, based on the correspondence shown in Table 2, the two identifiers do not meet a correspondence between a downlink HARQ ID and a sidelink HARQ ID that are of same data. Therefore, the data A and the data C do not come from same data. The first terminal apparatus determines, based on HARQ IDs and the predefined correspondence between the first identifier and the second identifier shown in Table 2, that the data D (HARQ IDs=3) and the data A (HARQ IDu=2) belong to same data. That the first data and the second data belong to same data is that the first data and the second data come from a same transport block TB, same source data, or same original data. The two pieces of data may be combined, so that a data restoring rate is increased due to combination.

**Table 2 Example of a correspondence between the first identifier and the second identifier**

| First identifier | Second identifier |
|---|---|
| HARQ IDu=1 | HARQ IDs=1 |
| HARQ IDu=2 | HARQ IDs=3 |
| HARQ IDu=3 | HARQ IDs=2 |
| ... | ... |

Manner C: The first identification information includes the first identifier and the second identifier. The second identification information includes the second identifier. The first identifier is used to identify the first data, and the second identifier is used to identify the second data. The first terminal apparatus determines, based on the second identifier from the first network apparatus and the second identifier from the second terminal apparatus, that the first data and the second data belong to same data. That the first data and the second data belong to same data is that the first data and the second data come from a same transport block TB, same source data, or same original data.

For example, data received by the first terminal apparatus on a downlink is data A. A hybrid automatic repeat request process number of the data A is HARQ IDu=2, and first identification information of the data A further includes HARQ IDs=1. The HARQ IDu represents a HARQ ID corresponding to downlink data. The first terminal apparatus separately receives data B, data C, and data D on a sidelink. A Uu link corresponding to the data B associates with HARQ IDs=1, a Uu link corresponding to the data C associates with HARQ IDs=2, and a Uu link corresponding to the data D associates with HARQ IDs=3, where the HARQ IDs represents a HARQ ID corresponding to sidelink data. The first terminal apparatus determines, based on the HARQ IDs, that the data B (HARQ IDs=1) and the data A (HARQ IDu=2, HARQ IDs=1) belong to same data. That the first data and the second data belong to same data is that the first data and the second data come from a same transport block TB, same source data, or same original data. The two pieces of data may be combined, so that a data restoring rate is increased due to combination.

**Table 3 Examples of data received on a sidelink and corresponding identifiers**

| Data | Identifier |
|---|---|
| Data B | HARQ IDs=1 |
| Data C | HARQ IDs=2 |
| Data D | HARQ IDs=3 |

According to the foregoing method, the first terminal apparatus receives the first data and the first identification information from the first network apparatus and the second data and the second identification information from the second terminal apparatus. The first terminal apparatus determines, based on the first identification information and the second identification information, that the first data and the second data belong to same data, and combines the first data and the second data. Combination of data from different links that belongs to same data can improve a probability that the first terminal apparatus successfully restores the data from the data, and improve a success rate and reliability of data transmission. Herein, "from same data" means that data comes from a same transport block TB, same source data, or same original data.

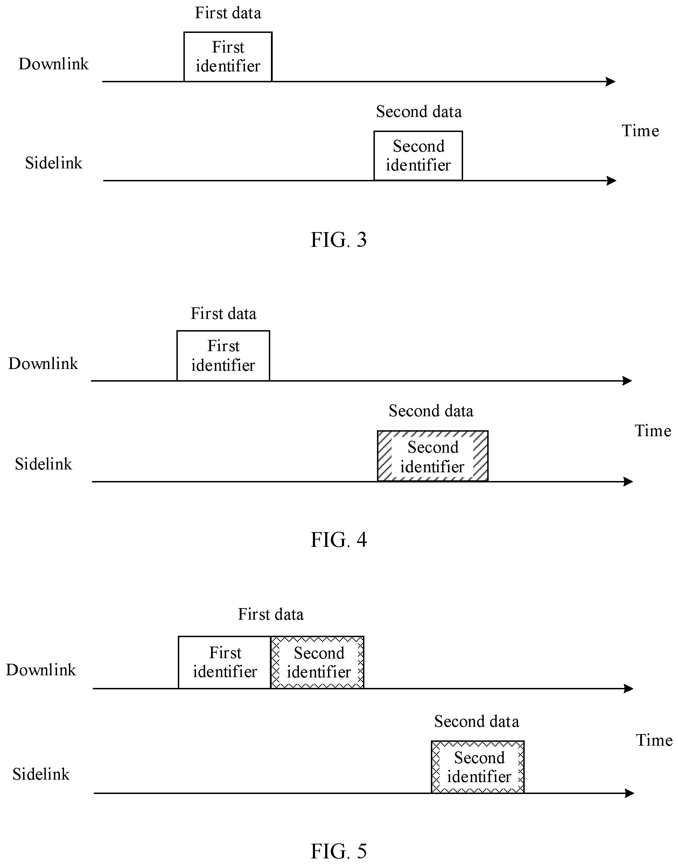

In FIG. 3, optionally, the first identification information includes the first identifier, and the first identifier is used to identify the first data. The second identification information includes the second identifier, and the second identifier is used to identify the second data. The second identifier and the first identifier are a same identifier. That the determining unit 720 of the first terminal apparatus determines, based on the first identification information and the second identification information, that the first data and the second data belong to same data includes: The determining unit 720 of the first terminal apparatus determines, based on the first identifier and the second identifier, that the first data and the second data belong to same data. That the first data and the second data belong to same data is that the first data and the second data come from a same transport block TB, same source data, or same original data. Optionally, the second identifier is determined based on the first identifier of the first data. The second identifier may be the same as the first identifier, or may be determined based on the first identifier in another manner. Optionally, the second identifier may be new indication information added for the second data on a sidelink. This implies information that the second data is a forwarded data block.

In FIG. 3, the first data and the first identification information are sent by the first network apparatus to the first terminal apparatus and the second terminal apparatus at the same time on a downlink. The first identification information includes the first identifier, and the first identifier is used to identify the first data. The second terminal apparatus receives, on a downlink, the first data and the first identification information from the first network apparatus. The second terminal apparatus processes the first data to obtain the second data, and the second terminal apparatus further generates the second identifier in the second identification information based on the first identifier in the first identification information. The second terminal apparatus sends the second data and the second identification information to the first terminal apparatus on a sidelink. The second identification information corresponding to the second data includes the first identifier. Therefore, the second identifier in the second identification information is additional indication information on the sidelink. The second identifier further implies that the second data carries a forwarded transport block instead of a non-forwarded transport block, that is, the first identifier in the first identification information is used to identify the first data. The first identifier in the second identification information is used to identify the second data. For example, the first identifier in the second identification information is HARQ IDss=5. The HARQ IDss is unrelated to a second identifier HARQ IDs in the second identification information, and the HARQ IDss is also unrelated to a second identifier HARQ IDu in the first identification information. The HARQ IDss is determined not depending on any identifier in the first identification information or the second identification information. Therefore, the first identifier in the second identification information is not used to determine whether the second data corresponds to the first data. The second identifier in the second identification information is determined based on the first identifier in the first identification information. The second identifier in the second identification information is used to identify first data specifically corresponding to the second data, that is, specific first data that comes from a same transport block (transport block, TB), same source data, or same original data.

For example, data received by the first terminal apparatus on a downlink is the first data. The first identifier of the first data, namely, a hybrid automatic repeat request process number, is HARQ IDu=1. The first terminal apparatus separately receives the second data and third data on a sidelink. The second identifier of the second data is HARQ IDs=1 associated with a Uu link, and a second identifier of the third data is HARQ IDs=2 associated with a Uu link. In this case, the first terminal apparatus determines, based on the HARQ IDs, that the second data and the first data come from a same transport block TB, same source data, or same original data. The two pieces of data may be combined, so that a data restoring rate is increased due to combination.

According to the foregoing method, the first terminal apparatus determines, based on that the first identifier from the first network apparatus and the second identifier from the second terminal apparatus are the same, that the first data from the first network apparatus and the second data from the second terminal apparatus belong to same data. Therefore, the first terminal apparatus combines the first data and the second data, to improve a success rate of restoring the transport block TB, the original data, or the source data that is jointly corresponding to the first data and the second data. This is beneficial to communication reliability.

In FIG. 4, optionally, the first identification information includes the first identifier, and the first identifier is used to identify the first data. The second identification information includes the second identifier, and the second identifier is used to identify the second data. A meaning of the second identifier in FIG. 4 is different from that of the second identifier in FIG. 3. In FIG. 3, the first identifier in the first identification information is used to identify the first data, and the second identifier in the second identification information is used to identify corresponding first data. The first identifier of the second identification information is used to identify the second data (not shown in FIG. 3). However, in FIG. 4, the second identifier in the second identification information is used to identify a correspondence between the first data and the second data, as well as the second data. Therefore, the second identifier also has an attribute of the first identifier, and there is no individual first identifier in the second identification information. That the determining unit 720 of the first terminal apparatus determines, based on the first identification information and the second identification information, that the first data and the second data belong to same data includes: The determining unit 720 of the first terminal apparatus determines, based on the first identifier, the second identifier, and the correspondence between the first identifier and the second identifier, that the first data and the second data belong to same data. That the first data and the second data belong to same data is that the first data and the second data come from a same transport block TB, same source data, or same original data.

Optionally, the correspondence between the first identifier and the second identifier is protocol-defined; or the first terminal apparatus receives a higher-layer signaling configuration or a physical layer signaling configuration from the first network apparatus, where the higher-layer signaling configuration or the physical layer signaling configuration is used to indicate the correspondence between the first identifier and the second identifier, and the correspondence is used to indicate that the first data identified by the first identifier and the second data identified by the second identifier belong to same data. That the first data and the second data belong to same data is that the first data and the second data come from a same transport block TB, same source data, or same original data.

For example, data received by the first terminal apparatus on a downlink is the first data. The first identifier in the first identification information corresponding to the first data, namely, a hybrid automatic repeat request process number, is HARQ IDu=2. The first terminal apparatus further separately receives the second data, third data, and fourth data on a sidelink. A Uu link corresponding to the second data associates with HARQ IDs=3, a Uu link corresponding to the third data associates with HARQ IDs=2, and a Uu link corresponding to the fourth data associates with HARQ IDs=1. A second identifier HARQ IDs=2 of the third data is the same as the HARQ ID of the first data. However, based on the correspondence shown in Table 2, the two identifiers do not meet a correspondence between a downlink HARQ ID and a sidelink HARQ ID of same data. Therefore, the first data and the third data do not come from same data. The first terminal apparatus determines, based on the HARQ IDs and the predefined correspondence between the first identifier and the second identifier shown in Table 2, that the second data (HARQ IDs=3) and the first data (HARQ IDu=2) belong to same data. That the first data and the second data belong to same data is that the first data and the second data come from a same transport block TB, same source data, or same original data. The two pieces of data may be combined, so that a data restoring rate is increased due to combination.

An example of the correspondence between the first identifier and the second identifier is shown in Table 2. The correspondence between the first identifier and the second identifier may alternatively be expressed in another form. This is not limited in this embodiment of this application.

In this embodiment of this application, the first identifier, the second identifier, and the correspondence between the first identifier and the second identifier are jointly used to determine that the first data and the second data belong to same data. That the first data and the second data belong to same data means that the first data and the second data come from a same transport block TB, same source data, or same original data. A correspondence manner of a numerical relationship between the first identifier and the second identifier is more flexible.

In FIG. 5, optionally, the first identification information includes the first identifier and the second identifier. The second identification information includes the second identifier. The first identifier is used to identify the first data. The second identifier is used to identify the second data, and the second identifier is further used to determine whether the second data and the first data belong to same data. A meaning of the second identifier in FIG. 5 is different from that of the second identifier in FIG. 3. Herein, the second identifier in the second identification information is used to identify a correspondence between the first data and the second data, as well as the second data. Therefore, the second identifier also has an attribute of the first identifier, and there is no individual first identifier in the second identification information. That the first terminal apparatus determines, based on the first identification information and the second identification information, that the first data and the second data belong to same data includes: The first terminal apparatus determines, based on the second identifier from the first network apparatus and the second identifier from the second terminal apparatus, that the first data and the second data belong to same data. That the first data and the second data belong to same data is that the first data and the second data come from a same transport block TB, same source data, or same original data.

In FIG. 5, data received by the first terminal apparatus on a downlink is the first data. The first identification information corresponding to the first data, namely, a hybrid automatic repeat request process number, is HARQ IDu=2, and the first identification information of the first data further includes HARQ IDs=1. The HARQ IDs is the second identifier in the first identification information. The first terminal apparatus separately receives the second data, third data, and fourth data on a sidelink. The second identifier of the second data is HARQ IDs=1 associated with a Uu link, a second identifier of the third data is HARQ IDs=2 associated with a Uu link, and a second identifier of the data D is HARQ IDs=3 associated with a Uu link, where the HARQ IDs represents a HARQ ID corresponding to sidelink data. The first terminal apparatus determines, based on the HARQ IDs, that the second data (HARQ IDs=1) and the first data (HARQ IDu=2, HARQ IDs=1) belong to same data. That the first data and the second data belong to same data is that the first data and the second data come from a same transport block TB, same source data, or same original data. The two pieces of data may be combined, so that a data restoring rate is increased due to combination. Optionally, the first identifier may be a hybrid automatic repeat request (hybrid automatic repeat request, HARQ) process number, and the HARQ process number is configured by a network or determined in another manner. Optionally, the first identification information and the second identification information may further include new data indicators NDIs and/or subcarrier numbers CARRIER IDs and/or cell numbers CELL IDs.

Optionally, for two adjacent transmissions with a same HARQ process number, if NDIs of the two transmissions do not change, data signals of the two transmissions come from a same transport block. If NDIs of two adjacent transmissions with a same HARQ process number change, it indicates that data signals of the two transmissions come from different transport blocks, different original data, or different source data.

Optionally, two pieces of data respectively transmitted on two different subcarriers may have two same HARQ process numbers, but the two pieces of data corresponding to the two HARQ process numbers are completely different and do not come from same data. Therefore, the subcarrier number CARRIER ID may further be required for determining whether pieces of data come from same data. For example, if two pieces of data come from different subcarriers, two or more pieces of data from different subcarriers cannot be combined regardless of whether the first identifier and the second identifier are the same or whether the correspondence is met.

Optionally, whether pieces of data on different links belong to same data may be determined based on the cell number CELL ID. That the first data and the second data belong to same data is that the first data and the second data come from a same transport block TB, same source data, or same original data.

Optionally, that the first data and the second data belong to same data includes: The first data and the second data belong to a same data block, same source data, or same original data, and the first data and the second data are obtained by encoding a same data block, same source data, or same original data.

In an example in FIG. 6, the first identification information and the second identification information both include a HARQ process number and a new data indicator NDI. The first terminal apparatus receives the first data and the first identification information on a downlink, where a first identifier HARQ ID of the first identification information is 1. The first terminal apparatus receives, on a sidelink, fifth data, fourth data, third data, the second data, and identification information respectively corresponding to the fifth data, the fourth data, the third data, and the second data. After receiving data signals on the downlink and on the sidelink, the first terminal apparatus receives, on the sidelink, a sidelink data signal corresponding to a HARQ ID when a time rule is met, and learns of that a data signal from the first network apparatus and the sidelink data signal come from a same transport block, and these signals can be combined. The time rule may be that a newly transmitted sidelink data signal corresponding to the 1^{st} HARQ IDs after delta_T time units after the downlink data signal is received.

In FIG. 6, whether sidelink data and downlink data come from a same transport block or same source data is determined in the following manner: When identification information of the downlink data is the same as identification information of the sidelink data, it indicates that the two pieces of data come from a same transport block or source data. The first terminal apparatus receives, on the downlink, the first data and the first identification information from the first network apparatus, where the first identifier HARQ ID of the first identification information is 1. The first terminal apparatus receives the second to fifth data and the corresponding identification information on the sidelink. A time difference between a time point at which the fifth data and the fourth data are received and a time point at which the downlink first data is received is less than Δt, where Δt represents a decoding delay, that is, the first data is sent by the first network apparatus to the first terminal apparatus and the second terminal apparatus at the same time. Only data on the sidelink received after a period of time Δt after the first terminal apparatus receives the first data may be the second data that is sent by the second terminal apparatus after receiving the first data, where Δt is a reserved period of time for decoding for the second terminal apparatus. Therefore, even if HARQ IDs of the fifth data and the fourth data are 1, the two pieces of data do not meet a time condition. Therefore, the two pieces of data and the first data do not belong to a same transport block or source data. Identification information of the third data is the same as fourth identification information. Therefore, the third data and the first data also do not come from same data, either. A HARQ ID of the second data is 1 and an NDI of the second data is 0. This indicates that the second data is new data different from the third data. Receiving time meets the condition. Therefore, the second data and the first data come from same data, as shown in shaded parts in FIG. 6, and combination can be performed. Optionally, in addition to delta_t, a time relationship may alternatively be a specified sidelink sending time unit, for example, sidelink transmission that starts from an X^{th} symbol after the last symbol of the PDCCH channel. The last symbol of the PDSCH channel and the last symbol of the PDCCH are both examples of determining a start point location of the time relationship. The present invention may include another manner of determining a start point of the time relationship. Optionally, determining, based on the first identification information and the second identification information, that the first data and the second data belong to same data further includes: The first terminal apparatus determines, based on the first identification information, the second identification information, a first time difference, and a first time threshold, that the first data and the second data belong to same data, where the first time difference includes a time difference between a time point at which the first terminal apparatus receives the first data and a time point at which the first terminal apparatus receives the second data, and the first time difference is less than the first time threshold. The first time threshold is protocol-defined; or the first terminal apparatus receives a higher-layer signaling configuration or a physical layer signaling configuration from the first network apparatus, where the higher-layer signaling configuration or the physical layer signaling configuration is used to indicate the first time threshold. Optionally, to avoid a conflict that a sidelink HARQ ID dynamically allocated by a network device has been used by the sidelink, the network device may preconfigure a sidelink HARQ ID resource pool for sidelink HARQ IDs that can be used by the sidelink. The sidelink HARQ IDs in the sidelink HARQ ID resource pool are all used to forward a transport block. In this way, all sidelink HARQ IDs dynamically allocated by the network device come from the resource pool. In this way, a conflict that the sidelink HARQ ID dynamically allocated by the network device is used by the sidelink can be avoided. For example, only when a value of a HARQ IDs is one of 1, 2, 3, or 4, it indicates that data corresponding to the HARQ IDs is forwarded by the second terminal apparatus to the first terminal apparatus, and data that is on the downlink and that comes from same data or a same data block needs to be searched for, to complete a combination operation. If the value of the HARQ IDs is other, for example, the value of the HARQ IDs is HARQ IDs=6, it indicates that the data corresponding to the HARQ IDs is not forwarded, and the combination operation does not need to be performed.

Optionally, an additional indication may be used to assist the first terminal apparatus in distinguishing whether a data signal carries a forwarded transport block or a non-forwarded transport block. Only when it is indicated to be the forwarded transport block, the first terminal apparatus searches for an association relationship between a HARQ ID on the downlink and a data signal corresponding to the HARQ ID on the sidelink. For example, the additional indication may be a 1-bit flag. 1 indicates forwarding, and 0 indicates not forwarding.

Optionally, the first terminal apparatus and the second terminal apparatus belong to a same cooperation group, and a quantity of terminal apparatuses in the cooperation group is greater than or equal to 2. According to this method, in addition to the first terminal apparatus and the second terminal apparatus, the cooperation group may further include a third terminal apparatus or more terminal apparatuses, where the third terminal apparatus has same functions as the second terminal apparatus or the first terminal apparatus. A plurality of terminal apparatuses cooperate with each other, so that a success rate of restoring data by each terminal apparatus can be effectively improved.

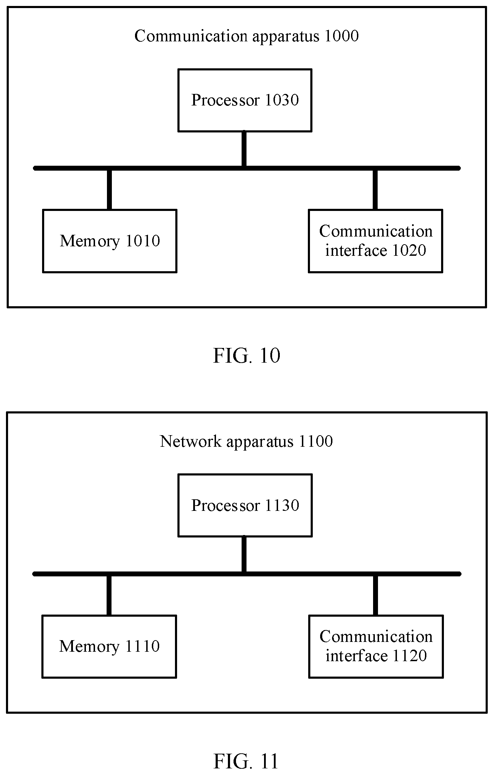

FIG. 10 is a schematic block diagram of a communication apparatus 1000 according to an embodiment of this application. It should be understood that the communication apparatus 1000 can perform the steps performed by the terminal device in the method in FIG. 2 or another embodiment. To avoid repetition, details are not described herein again. The communication apparatus 1000 includes:
a memory 1010, configured to store a program;
a communication interface 1020, configured to communicate with another device; and
a processor 1030, configured to execute the program in the memory 1010, where when the program is executed, the processor 1030 is configured to: receive first data and first identification information of the first data from a first network apparatus through the communication interface 1020, where the first identification information is used to identify the first data; receive second data and second identification information of the second data from a second terminal apparatus, where the second identification information is used to identify the second data, and the first identification information and the second identification information are further used to determine whether the first data and the second data belong to same data; determine, based on the first identification information and the second identification information, that the first data and the second data belong to same data; and combine the first data and the second data.

Alternatively, the processor 1030 is configured to: receive first data and first identification information of the first data from a first network apparatus through the communication interface 1020, where the first identification information is used to identify the first data; send second data and second identification information of the second data to a first terminal apparatus, where the second identification information is used to identify the second data, the second data is data determined based on the first data, the second identification information is identification information determined based on the first identification information, and the first identification information used to identify the first data sent by the first network apparatus to the first terminal apparatus and the second identification information are further used to determine whether the first data sent by the first network apparatus to the first terminal apparatus and the second data belong to same data. That the first data and the second data belong to same data is that the first data and the second data come from a same transport block TB, same source data, or same original data.

It should be understood that the communication apparatus 1000 shown in FIG. 10 may be a chip or a circuit, for example, a chip or a circuit that may be disposed in a terminal device. The communication interface 1020 may alternatively be a transceiver. The transceiver includes a receiver and a transmitter. Further, the communication apparatus 1000 may include a bus system.

The processor 1030, the memory 1010, the receiver, and the transmitter are connected by coupling, and may communicate with each other, or may be connected by using a bus system. The processor 1030 is configured to execute instructions stored in the memory 1010, to control the receiver to receive a signal and control the transmitter to send the signal, and to complete steps of the network device in the communication method in this application. The receiver and the transmitter may be a same physical entity or different physical entities. When the receiver and the transmitter are a same physical entity, the receiver and the transmitter may be collectively referred to as a transceiver. The memory 1010 may be integrated in the processor 1030, or may be disposed separately from the processor 1030.

In an implementation, functions of the receiver and the transmitter may be considered to be implemented through a transceiver circuit or a dedicated transceiver chip. It may be considered that the processor 1030 may be implemented by using a dedicated processing chip, a processing circuit, a processor, or a general-purpose chip.

FIG. 11 is a schematic block diagram of a communication apparatus 1100 according to an embodiment of this application. It should be understood that the communication apparatus 1100 can perform the steps performed by the network device in the foregoing methods. To avoid repetition, details are not described herein again. The communication apparatus 1100 includes:
a memory 1110, configured to store a program; a communication interface 1120, configured to communicate with another device; and a processor 1130, configured to execute the program in the memory 1110, where when the program is executed, the processor 1130 is configured to: send first data and first identification information to a first terminal apparatus through the communication interface 1120, where the first identification information is used to identify the first data; send the first data and the first identification information to a second terminal apparatus, where the first identification information is further used to determine second identification information, the second identification information is used to identify second data, the second data is data transmitted between the first terminal apparatus and the second terminal apparatus, and the first identification information and the second identification information are further used to determine whether the first data sent to the first terminal apparatus and the second data belong to same data. That the first data and the second data belong to same data is that the first data and the second data come from a same transport block TB, same source data, or same original data.

It should be understood that the communication apparatus 1100 shown in FIG. 11 may be a chip or a circuit, for example, a chip or a circuit that may be disposed in a network device. The communication interface 1120 may alternatively be a transceiver. The transceiver includes a receiver and a transmitter. Further, the communication apparatus 1100 may include a bus system.

The processor 1130, the memory 1110, the receiver, and the transmitter are connected by coupling, and may communicate with each other, or may be connected by using a bus system. The processor 1130 is configured to execute instructions stored in the memory 1110, to control the receiver to receive a signal and control the transmitter to send the signal, and to complete steps of the network device in the communication method in this application. The receiver and the transmitter may be a same physical entity or different physical entities. When the receiver and the transmitter are a same physical entity, the receiver and the transmitter may be collectively referred to as a transceiver. The memory 1110 may be integrated in the processor 1130, or may be disposed separately from the processor 1130.

In an implementation, functions of the receiver and the transmitter may be considered to be implemented through a transceiver circuit or a dedicated transceiver chip. It may be considered that the processor 1130 may be implemented by using a dedicated processing chip, a processing circuit, a processor, or a general-purpose chip.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. A plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical, a mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

Further embodiments of the present invention are provided in the following. It should be noted that the numbering used in the following section does not necessarily need to comply with the numbering used in the previous sections.

Embodiment 1. A data transmission method, comprising:
receiving, by a first terminal apparatus, first data and first identification information of the first data from a first network apparatus, wherein the first identification information is used to identify the first data;
receiving, by the first terminal apparatus, second data and second identification information of the second data from a second terminal apparatus, wherein the second identification information is used to identify the second data, and the first identification information and the second identification information are further used to determine whether the first data and the second data belong to same data; and
determining, by the first terminal apparatus, based on the first identification information and the second identification information, that the first data and the second data belong to same data.

Embodiment 2. The method according to embodiment 1, wherein
the first identification information comprises a first identifier, the first identifier is used to identify the first data, the second identification information comprises a second identifier, the second identifier is used to identify the second data, and the second identifier and the first identifier are a same identifier; and
the determining, by the first terminal apparatus, based on the first identification information and the second identification information, that the first data and the second data belong to same data comprises:
   determining, by the first terminal apparatus, based on the first identifier and the second identifier, that the first data and the second data belong to same data.

Embodiment 3. The method according to embodiment 1, wherein
the first identification information comprises a first identifier, the first identifier is used to identify the first data, the second identification information comprises a second identifier, and the second identifier is used to identify the second data; and
the determining, by the first terminal apparatus, based on the first identification information and the second identification information, that the first data and the second data belong to same data comprises:
   determining, by the first terminal apparatus, based on the first identifier, the second identifier, and a correspondence between the first identifier and the second identifier, that the first data and the second data belong to same data.

Embodiment 4. The method according to embodiment 1, wherein
the first identification information comprises a first identifier and a second identifier, the second identification information comprises the second identifier, the first identifier is used to identify the first data, the second identifier is used to identify the second data, and the second identifier is further used to determine whether the second data and the first data belong to same data; and
the determining, by the first terminal apparatus, based on the first identification information and the second identification information, that the first data and the second data belong to same data comprises:
   determining, by the first terminal apparatus, based on the second identifier from the first network apparatus and the second identifier from the second terminal apparatus, that the first data and the second data belong to same data.

Embodiment 5. The method according to any one of embodiments1 to 4, wherein the method further comprises:
combining, by the first terminal apparatus, the first data and the second data.

Embodiment 6. The method according to embodiments1 to 4, wherein
the determining, by the first terminal apparatus, based on the first identification information and the second identification information, that the first data and the second data belong to same data further comprises:
determining, by the first terminal apparatus, based on the first identification information, the second identification information, a first time difference, and a first time threshold, that the first data and the second data belong to same data, wherein the first time difference comprises a time difference between a time point at which the first terminal apparatus receives the first data and a time point at which the first terminal apparatus receives the second data, and the first time difference is less than the first time threshold, wherein
the first time threshold is protocol-defined; or
the first terminal apparatus receives a higher-layer signaling configuration or a physical layer signaling configuration from the first network apparatus, wherein the higher-layer signaling configuration or the physical layer signaling configuration is used to indicate the first time threshold.

Embodiment 7. The method according to any one of embodiments1 to 4, wherein
that the first data and the second data belong to same data comprises:
the first data and the second data belong to a same data block.

Embodiment 8. The method according to embodiment 3, wherein
the correspondence between the first identifier and the second identifier is protocol-defined; or
the first terminal apparatus receives a higher-layer signaling configuration or a physical layer signaling configuration from the first network apparatus, wherein the higher-layer signaling configuration or the physical layer signaling configuration is used to indicate the correspondence between the first identifier and the second identifier, and the correspondence is used to indicate that the first data identified by the first identifier and the second data identified by the second identifier belong to same data.

Embodiment 9. The method according to any one of embodiments 1 to 4, wherein
the first terminal apparatus and the second terminal apparatus belong to a same cooperation group, and a quantity of terminal apparatuses in the cooperation group is greater than or equal to 2.

Embodiment 10. A data transmission method, comprising:
sending, by a first network apparatus, first data and first identification information to a first terminal apparatus, wherein the first identification information is used to identify the first data; and
sending, by the first network apparatus, the first data and the first identification information to a second terminal apparatus, wherein the first identification information is further used to determine second identification information, the second identification information is used to identify second data, the second data is data transmitted between the first terminal apparatus and the second terminal apparatus, and the first identification information and the second identification information are further used to determine whether the first data sent to the first terminal apparatus and the second data belong to same data.

Embodiment 11. The method according to embodiment 10, wherein
the first identification information comprises a first identifier, and the first identifier is used to identify the first data sent by the first network apparatus to the first terminal apparatus or used to identify the first data sent by the first network apparatus to the second terminal apparatus;
the second identification information comprises a second identifier, the second identifier is used to identify the second data, and the second identifier and the first identifier are a same identifier; and
the first identifier used to identify the first data sent by the first network apparatus to the first terminal apparatus and the second identifier are used to determine that the first data sent by the first network apparatus to the first terminal apparatus and the second data belong to same data.

Embodiment 12. The method according to embodiment 10, wherein
the first identification information comprises a first identifier, and the first identifier is used to identify the first data sent by the first network apparatus to the first terminal apparatus or used to identify the first data sent by the first network apparatus to the second terminal apparatus;
the second identification information comprises a second identifier, and the second identifier is used to identify the second data; and
the first identifier used to identify the first data sent by the first network apparatus to the first terminal apparatus, the second identifier, and a correspondence between the first identifier and the second identifier are used to determine that the first data sent by the first network apparatus to the first terminal apparatus and the second data belong to same data.

Embodiment 13. The method according to embodiment 10, wherein
the first identification information comprises a first identifier and a second identifier, the second identification information comprises the second identifier, the first identifier is used to identify the first data sent by the first network apparatus to the first terminal apparatus or used to identify the first data sent by the first network apparatus to the second terminal apparatus, the second identifier is used to identify the second data, and the second identifier is further used to determine whether the second data and the first data belong to same data; and
the second identifier sent by the first network apparatus to the first terminal apparatus and the second identifier sent by the second terminal apparatus to the first terminal apparatus are used to determine that the first data sent by the first network apparatus to the first terminal apparatus and the second data belong to same data.

Embodiment 14. The method according to any one of embodiments 10 to 13, wherein
that the first data and the second data belong to same data comprises:
the first data and the second data belong to a same data block.

Embodiment 15. The method according to embodiment 12, wherein
the correspondence between the first identifier and the second identifier is protocol-defined; or
the first network apparatus sends a higher-layer signaling configuration or a physical layer signaling configuration to the first terminal apparatus, wherein the higher-layer signaling configuration or the physical layer signaling configuration is used to indicate the correspondence between the first identifier and the second identifier, and the correspondence is used to indicate that the first data identified by the first identifier and the second data identified by the second identifier belong to same data.

Embodiment 16. The method according to any one of embodiments10 to 13, wherein
the first terminal apparatus and the second terminal apparatus belong to a same cooperation group, and a quantity of terminal apparatuses in the cooperation group is greater than or equal to 2.

Embodiment 17. A data transmission method, comprising:
receiving, by a second terminal apparatus, first data and first identification information of the first data from a first network apparatus, wherein the first identification information is used to identify the first data; and
sending, by the second terminal apparatus, second data and second identification information of the second data to a first terminal apparatus, wherein the second identification information is used to identify the second data, the second data is data determined based on the first data, the second identification information is identification information determined based on the first identification information, and the first identification information used to identify the first data sent by the first network apparatus to the first terminal apparatus and the second identification information are further used to determine whether the first data sent by the first network apparatus to the first terminal apparatus and the second data belong to same data.

Embodiment 18. The method according to embodiment 17, wherein
the first identification information comprises a first identifier, and the first identifier is used to identify the first data received by the second terminal apparatus from the first network apparatus or used to identify the first data sent by the first network apparatus to the first terminal apparatus;
that the second identification information is identification information determined based on the first identification information comprises:
   the second identification information comprises a second identifier, the second identifier is used to identify the second data, and the second identifier and the first identifier are a same identifier; and
   the first identifier used to identify the first data sent by the first network apparatus to the first terminal apparatus and the second identifier are used to determine that the first data sent by the first network apparatus to the first terminal apparatus and the second data belong to same data.

Embodiment 19. The method according to embodiment 17, wherein
the first identification information comprises a first identifier, and the first identifier is used to identify the first data received by the second terminal apparatus from the first network apparatus or used to identify the first data sent by the first network apparatus to the first terminal apparatus;
the second identification information comprises a second identifier, and the second identifier is used to identify the second data;
that the second identification information is identification information determined based on the first identification information comprises:
   the second identifier is identification information determined based on the first identifier and a correspondence between the first identifier and the second identifier; and
   the first identifier used to identify the first data sent by the first network apparatus to the first terminal apparatus, the second identifier, and the correspondence between the first identifier and the second identifier are used to determine that the first data sent by the first network apparatus to the first terminal apparatus and the second data belong to same data.

Embodiment 20. The method according to embodiment 17, wherein
the first identification information comprises a first identifier and a second identifier, and the first identifier is used to identify the first data received by the second terminal apparatus from the first network apparatus or used to identify the first data sent by the first network apparatus to the first terminal apparatus; and
that the second identification information is identification information determined based on the first identification information comprises:
   the second identification information comprises the second identifier, the second identifier is used to identify the second data, and the second identifier is further used to determine whether the first data sent by the first network apparatus to the first terminal apparatus and the second data belong to same data; and
   the second identifier sent by the first network apparatus to the first terminal apparatus and the second identifier sent by the second terminal apparatus to the first terminal apparatus are used to determine that the first data and the second data belong to same data.

Embodiment 21. The method according to any one of embodiments 17 to 20, wherein
that the first data and the second data belong to same data comprises:
the first data and the second data belong to a same data block.

Embodiment 22. The method according to embodiment 19, wherein
the correspondence between the first identifier and the second identifier is protocol-defined; or
the first terminal apparatus receives a higher-layer signaling configuration or a physical layer signaling configuration from the first network apparatus, wherein the higher-layer signaling configuration or the physical layer signaling configuration is used to indicate the correspondence between the first identifier and the second identifier, and the correspondence is used to indicate that the first data identified by the first identifier and the second data identified by the second identifier belong to same data.

Embodiment 23. The method according to any one of embodiments 17 to 20, wherein
the first terminal apparatus and the second terminal apparatus belong to a same cooperation group, and a quantity of terminal apparatuses in the cooperation group is greater than or equal to 2.

Embodiment 24. A first terminal apparatus, comprising:
a receiving unit, configured to receive first data and first identification information of the first data from a first network apparatus, wherein the first identification information is used to identify the first data, wherein
the receiving unit is further configured to receive second data and second identification information of the second data from a second terminal apparatus, wherein the second identification information is used to identify the second data, and the first identification information and the second identification information are further used to determine whether the first data and the second data belong to same data; and
a determining unit, configured to determine, based on the first identification information and the second identification information, that the first data and the second data belong to same data.

Embodiment 25. The apparatus according to embodiment 24, wherein
the first identification information comprises a first identifier, the first identifier is used to identify the first data, the second identification information comprises a second identifier, the second identifier is used to identify the second data, and the second identifier and the first identifier are a same identifier; and
determining, by the determining unit, based on the first identification information and the second identification information, that the first data and the second data belong to same data comprises:
   determining, by the determining unit, based on the first identifier and the second identifier, that the first data and the second data belong to same data.

Embodiment 26. The apparatus according to embodiment 25, wherein
the first identification information comprises the first identifier, the first identifier is used to identify the first data, the second identification information comprises the second identifier, and the second identifier is used to identify the second data; and
the determining, by the determining unit, based on the first identification information and the second identification information, that the first data and the second data belong to same data comprises:
   determining, by the determining unit, based on the first identifier, the second identifier, and a correspondence between the first identifier and the second identifier, that the first data and the second data belong to same data.

Embodiment 27. The apparatus according to embodiment 25, wherein
the first identification information comprises the first identifier and the second identifier, the second identification information comprises the second identifier, the first identifier is used to identify the first data, the second identifier is used to identify the second data, and the second identifier is further used to determine whether the second data and the first data belong to same data; and
the determining, by the determining unit, based on the first identification information and the second identification information, that the first data and the second data belong to same data comprises:
   determining, by the determining unit, based on the second identifier from the first network apparatus and the second identifier from the second terminal apparatus, that the first data and the second data belong to same data.

Embodiment 28. The apparatus according to embodiments 24 to 27, wherein
the determining, by the determining unit, based on the first identification information and the second identification information, that the first data and the second data belong to same data further comprises:
determining, by the determining unit, based on the first identification information, the second identification information, a first time difference, and a first time threshold, that the first data and the second data belong to same data, wherein the first time difference comprises a time difference between a time point at which the receiving unit receives the first data and a time point at which the receiving unit receives the second data, and the first time difference is less than the first time threshold, wherein
the first time threshold is protocol-defined; or
the receiving unit receives a higher-layer signaling configuration or a physical layer signaling configuration from the first network apparatus, wherein the higher-layer signaling configuration or the physical layer signaling configuration is used to indicate the first time threshold.

Embodiment 29. The apparatus according to embodiments 24 to 27, wherein
that the first data and the second data belong to same data comprises:
the first data and the second data belong to a same data block.

Embodiment 30. The apparatus according to embodiment 26, wherein
the correspondence between the first identifier and the second identifier is protocol-defined; or
the receiving unit receives a higher-layer signaling configuration or a physical layer signaling configuration from the first network apparatus, wherein the higher-layer signaling configuration or the physical layer signaling configuration is used to indicate the correspondence between the first identifier and the second identifier, and the correspondence is used to indicate that the first data identified by the first identifier and the second data identified by the second identifier belong to same data.

Embodiment 31. A first network apparatus, comprising:
a sending unit, configured to send first data and first identification information to a first terminal apparatus, wherein the first identification information is used to identify the first data, wherein
the sending unit is further configured to send the first data and the first identification information to a second terminal apparatus, wherein the first identification information is further used to determine second identification information, the second identification information is used to identify second data, the second data is data transmitted between the first terminal apparatus and the second terminal apparatus, and the first identification information and the second identification information are further used to determine whether the first data sent to the first terminal apparatus and the second data belong to same data.

Embodiment 32. The apparatus according to embodiment 31, wherein
the first identification information comprises a first identifier, and the first identifier is used to identify the first data sent by the sending unit to the first terminal apparatus or used to identify the first data sent by the first network apparatus to the second terminal apparatus;
the second identification information comprises a second identifier, the second identifier is used to identify the second data, and the second identifier and the first identifier are a same identifier; and
the first identifier used to identify the first data sent by the sending unit to the first terminal apparatus and the second identifier are used to determine that the first data sent by the sending unit to the first terminal apparatus and the second data belong to same data.

Embodiment 33. The apparatus according to embodiment 31, wherein
the first identification information comprises a first identifier, and the first identifier is used to identify the first data sent by the first network apparatus to the first terminal apparatus or used to identify the first data sent by the sending unit to the second terminal apparatus;
the second identification information comprises a second identifier, and the second identifier is used to identify the second data; and
the first identifier used to identify the first data sent by the sending unit to the first terminal apparatus, the second identifier, and a correspondence between the first identifier and the second identifier are used to determine that the first data sent by the sending unit to the first terminal apparatus and the second data belong to same data.

Embodiment 34. The apparatus according to embodiment 31, wherein
the first identification information comprises a first identifier and a second identifier, the second identification information comprises the second identifier, the first identifier is used to identify the first data sent by the sending unit to the first terminal apparatus or used to identify the first data sent by the first network apparatus to the second terminal apparatus, the second identifier is used to identify the second data, and the second identifier is further used to determine whether the second data and the first data belong to same data; and
the second identifier sent by the sending unit to the first terminal apparatus and the second identifier sent by the second terminal apparatus to the first terminal apparatus are used to determine that the first data sent by the sending unit to the first terminal apparatus and the second data belong to same data.

Embodiment 35. The apparatus according to any one of embodiments 31 to 34, wherein
that the first data and the second data belong to same data comprises:
the first data and the second data belong to a same data block.

Embodiment 36. The apparatus according to embodiment 33, wherein
the correspondence between the first identifier and the second identifier is protocol-defined; or
the sending unit sends a higher-layer signaling configuration or a physical layer signaling configuration to the first terminal apparatus, wherein the higher-layer signaling configuration or the physical layer signaling configuration is used to indicate the correspondence between the first identifier and the second identifier, and the correspondence is used to indicate that the first data identified by the first identifier and the second data identified by the second identifier belong to same data.

Embodiment 37. A second terminal apparatus, comprising:
a receiving unit, configured to receive first data and first identification information of the first data from a first network apparatus, wherein the first identification information is used to identify the first data; and
a sending unit, configured to send second data and second identification information of the second data to a first terminal apparatus, wherein the second identification information is used to identify the second data, the second data is data determined based on the first data, the second identification information is identification information determined based on the first identification information, and the first identification information used to identify the first data sent by the first network apparatus to the first terminal apparatus and the second identification information are further used to determine whether the first data sent by the first network apparatus to the first terminal apparatus and the second data belong to same data.

Embodiment 38. The apparatus according to embodiment 37, wherein
the first identification information comprises a first identifier, and the first identifier is used to identify the first data received by the receiving unit from the first network apparatus or used to identify the first data sent by the first network apparatus to the first terminal apparatus;
that the second identification information is identification information determined based on the first identification information comprises:
   the second identification information comprises a second identifier, the second identifier is used to identify the second data, and the second identifier and the first identifier are a same identifier; and
   the first identifier used to identify the first data sent by the first network apparatus to the first terminal apparatus and the second identifier are used to determine that the first data sent by the first network apparatus to the first terminal apparatus and the second data belong to same data.

Embodiment 39. The apparatus according to embodiment 37, wherein
the first identification information comprises a first identifier, and the first identifier is used to identify the first data received by the receiving unit from the first network apparatus or used to identify the first data sent by the first network apparatus to the first terminal apparatus;
the second identification information comprises a second identifier, and the second identifier is used to identify the second data;
that the second identification information is identification information determined based on the first identification information comprises:
   the second identifier is identification information determined based on the first identifier and a correspondence between the first identifier and the second identifier; and
   the first identifier used to identify the first data sent by the first network apparatus to the first terminal apparatus, the second identifier, and the correspondence between the first identifier and the second identifier are used to determine that the first data sent by the first network apparatus to the first terminal apparatus and the second data belong to same data.

Embodiment 40. The apparatus according to embodiment 37, wherein
the first identification information comprises a first identifier and a second identifier, and the first identifier is used to identify the first data received by the receiving unit from the first network apparatus or used to identify the first data sent by the first network apparatus to the first terminal apparatus;
that the second identification information is identification information determined based on the first identification information comprises:
   the second identification information comprises the second identifier, the second identifier is used to identify the second data, and the second identifier is further used to determine whether the first data sent by the first network apparatus to the first terminal apparatus and the second data belong to same data; and
   the second identifier sent by the first network apparatus to the first terminal apparatus and the second identifier sent by the second terminal apparatus to the first terminal apparatus are used to determine that the first data and the second data belong to same data.

Embodiment 41. The method according to any one of embodiments 37 to 40, wherein
that the first data and the second data belong to same data comprises:
the first data and the second data belong to a same data block.

Embodiment 42. The method according to embodiment 39, wherein
the correspondence between the first identifier and the second identifier is protocol-defined; or
the first terminal apparatus receives a higher-layer signaling configuration or a physical layer signaling configuration from the first network apparatus, wherein the higher-layer signaling configuration or the physical layer signaling configuration is used to indicate the correspondence between the first identifier and the second identifier, and the correspondence is used to indicate that the first data identified by the first identifier and the second data identified by the second identifier belong to same data.

Embodiment 43. A communication apparatus, comprising a processor, wherein the processor is connected to a memory, the memory is configured to store a computer program, and the processor is configured to execute the computer program stored in the memory, so that the apparatus performs the method according to any one of embodiments 1 to 8.

Embodiment 44. A network apparatus, comprising a processor, wherein the processor is connected to a memory, the memory is configured to store a computer program, and the processor is configured to execute the computer program stored in the memory, so that the apparatus performs the method according to any one of embodiments 9 to 15.

Embodiment 45. A communication apparatus, comprising a processor, wherein the processor is connected to a memory, the memory is configured to store a computer program, and the processor is configured to execute the computer program stored in the memory, so that the apparatus performs the method according to any one of embodiments 16 to 22.

Embodiment 46. A computer-readable storage medium, wherein the computer-readable storage medium stores a computer program, and when the computer program is run, the method according to any one of embodiments 1 to 8 is implemented.

Embodiment 47. A computer-readable storage medium, wherein the computer-readable storage medium stores a computer program, and when the computer program is run, the method according to any one of embodiments 9 to 15 is implemented.

Embodiment 48. A computer-readable storage medium, wherein the computer-readable storage medium stores a computer program, and when the computer program is run, the method according to any one of embodiments16 to 22 is implemented.

49. A communication system, comprising the first terminal apparatus according to any one of embodiments21 to 30, the first network apparatus according to any one of embodiments31 to 36, and the second terminal apparatus according to any one of embodiments 37 to 42.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A data transmission method, comprising:
receiving, by a first terminal apparatus, first data and first identification information of the first data from a first base station, wherein the first identification information is used to identify the first data, and wherein the first data and the first identification information are received through downlink;
receiving, by the first terminal apparatus, second data and second identification information of the second data from a second terminal apparatus, wherein the second identification information is used to identify the second data, and the first identification information and the second identification information are further used to determine whether the first data and the second data belong to same data, and wherein the second data and the second identification information are received through sidelink; and
determining, by the first terminal apparatus, based on the first identification information and the second identification information, that the first data and the second data belong to same data.

2. The method according to claim 1, wherein
the first identification information comprises a first identifier, the first identifier is used to identify the first data, the second identification information comprises a second identifier, the second identifier is used to identify the second data, and the second identifier and the first identifier are a same identifier; and
the determining, by the first terminal apparatus, based on the first identification information and the second identification information, that the first data and the second data belong to same data comprises:
determining, by the first terminal apparatus, based on the first identifier and the second identifier, that the first data and the second data belong to same data.

3. The method according to claim 1, wherein
the first identification information comprises a first identifier and a second identifier, the second identification information comprises the second identifier, the first identifier is used to identify the first data, the second identifier is used to identify the second data, and the second identifier is further used to determine whether the second data and the first data belong to same data; and
the determining, by the first terminal apparatus, based on the first identification information and the second identification information, that the first data and the second data belong to same data comprises:
determining, by the first terminal apparatus, based on the second identifier from the first base station and the second identifier from the second terminal apparatus, that the first data and the second data belong to same data.

4. The method according to any one of claims 1 to 3 wherein the method further comprises:
combining, by the first terminal apparatus, the first data and the second data, wherein the combining operation comprises soft combination or selective combination.

5. The method according to any one of claims 1 to 4, wherein
the determining, by the first terminal apparatus, based on the first identification information and the second identification information, that the first data and the second data belong to same data further comprises:
determining, by the first terminal apparatus, based on the first identification information, the second identification information, a first time difference, and a first time threshold, that the first data and the second data belong to same data, wherein the first time difference comprises a time difference between a time point at which the first terminal apparatus receives the first data and a time point at which the first terminal apparatus receives the second data, and the first time difference is less than the first time threshold, wherein
the first time threshold is protocol-defined; or
the first terminal apparatus receives a higher-layer signaling configuration or a physical layer signaling configuration from the first base station, wherein the higher-layer signaling configuration or the physical layer signaling configuration is used to indicate the first time threshold.

6. The method according to claim 3, wherein
a correspondence between the first identifier and the second identifier is protocol-defined; or
the first terminal apparatus receives a higher-layer signaling configuration or a physical layer signaling configuration from the first base station, wherein the higher-layer signaling configuration or the physical layer signaling configuration is used to indicate the correspondence between the first identifier and the second identifier, and the correspondence is used to indicate that the first data identified by the first identifier and the second data identified by the second identifier belong to same data.

7. A data transmission method, comprising:
sending, by a first base station, first data and first identification information to a first terminal apparatus, wherein the first identification information is used to identify the first data, and wherein the first data and the first identification information are sent through downlink; and
sending, by the first base station, the first data and the first identification information to a second terminal apparatus, wherein the first identification information is further used to determine second identification information, the second identification information is used to identify second data, the second data is data transmitted between sidelink between the first terminal apparatus and the second terminal apparatus, and the first identification information and the second identification information are further used to determine whether the first data sent to the first terminal apparatus and the second data belong to same data.

8. The method according to claim 7, wherein
the correspondence between the first identifier and the second identifier is protocol-defined; or
the first base station sends a higher-layer signaling configuration or a physical layer signaling configuration to the first terminal apparatus, wherein the higher-layer signaling configuration or the physical layer signaling configuration is used to indicate the correspondence between the first identifier and the second identifier, and the correspondence is used to indicate that the first data identified by the first identifier and the second data identified by the second identifier belong to same data.

9. A data transmission method, comprising:
receiving, by a second terminal apparatus, first data and first identification information of the first data from a first base station, wherein the first identification information is used to identify the first data, and wherein the first data and the first identification information are received through downlink; and
sending, by the second terminal apparatus, second data and second identification information of the second data to a first terminal apparatus through sidelink, wherein the second identification information is used to identify the second data, the second data is data determined based on the first data, the second identification information is identification information determined based on the first identification information, and the first identification information used to identify the first data sent by the first base station to the first terminal apparatus and the second identification information are further used to determine whether the first data sent by the first base station to the first terminal apparatus and the second data belong to same data.

10. The method according to claim 9, wherein
the first identification information comprises a first identifier, and the first identifier is used to identify the first data received by the second terminal apparatus from the first base station or used to identify the first data sent by the first base station to the first terminal apparatus;
that the second identification information is identification information determined based on the first identification information comprises:
the second identification information comprises a second identifier, the second identifier is used to identify the second data, and the second identifier and the first identifier are a same identifier; and
the first identifier used to identify the first data sent by the first base station to the first terminal apparatus and the second identifier are used to determine that the first data sent by the first base station to the first terminal apparatus and the second data belong to same data.

11. The method according to claim 9, wherein
the first identification information comprises a first identifier and a second identifier, and the first identifier is used to identify the first data received by the second terminal apparatus from the first base station or used to identify the first data sent by the first base station to the first terminal apparatus; and
that the second identification information is identification information determined based on the first identification information comprises:
the second identification information comprises the second identifier, the second identifier is used to identify the second data, and the second identifier is further used to determine whether the first data sent by the first base station to the first terminal apparatus and the second data belong to same data; and
the second identifier sent by the first base station to the first terminal apparatus and the second identifier sent by the second terminal apparatus to the first terminal apparatus are used to determine that the first data and the second data belong to same data.

12. The method according to claim 11, wherein
a correspondence between the first identifier and the second identifier is protocol-defined; or
the first terminal apparatus receives a higher-layer signaling configuration or a physical layer signaling configuration from the first base station, wherein the higher-layer signaling configuration or the physical layer signaling configuration is used to indicate the correspondence between the first identifier and the second identifier, and the correspondence is used to indicate that the first data identified by the first identifier and the second data identified by the second identifier belong to same data.

13. A computer-readable storage medium comprising instructions which, when executed by a computer, cause the computer to carry out the method according to any one of claims 1 to 6, or claims 7 to 8, or any one of claims 9 to 12.

14. A communication apparatus, configured to cause a terminal apparatus to perform the method according to any one of claims 1 to 6, or any one of claims 9 to 12.

15. A communication apparatus, configured to cause a network apparatus to perform the method according to any one of claims 7 to 8.
